# EUROPEAN PATENT APPLICATION

(11) **EP 2 293 489 A1**
(43) Date of publication of application: **09.03.2011**
(21) Application number: 09769841.9
(22) Date of filing: 25.05.2009
(51) Int. Cl.: H04L 9/08

(54) **KEY MIGRATION DEVICE**

(30) Priority: 23.06.2008 JP 2008163070
(71) Applicant: Panasonic Corporation, Kadoma-shi Osaka 571-8501 (JP)
(72) Inventor: HIDEKI, Matsushima, Osaka 540-6207 (JP); HISASHI, Takayama, Osaka 540-6207 (JP); YUICHI, Futa, Osaka 540-6207 (JP); TAKAYUKI, Ito, Osaka 540-6207 (JP); TOMOYUKI, Haga, Osaka 540-6207 (JP)
(74) Representative: Grünecker, Kinkeldey, Stockmair & Schwanhäusser Anwaltssozietät
(86) International application number: PCT/JP2009/002283
(87) International publication number: WO 2009/157131

(57) **Abstract**

Provided is a key migration device which can securely and reliably control the migration of keys. A migration authority (101) fetches a generation level which is the security level of a first electronic terminal (3011) and an output destination level which is the security level of a third electronic terminal (3013), decides whether the relationship between the generation level and the output destination level satisfies a predetermined condition when a request for fetching a collection of keys is received from the third electronic terminal (3013), outputs the key generated by the first electronic terminal (3011) among the collection of keys to the third electronic terminal (3013) if the predetermined condition is fulfilled, and restricts output to the third electronic terminal (3013) of the key generated by the first electronic terminal (3011) among the collection of keys if the predetermined condition is not fulfilled.

## Description

### [Technical Field]

The present invention relates to technology for migration of private data between security terminals.

### [Background Art]

In recent years, along with increased awareness of information security, the need for technology to protect data has also increased.

Given this need, the Trusted Computing Group (TCG) was formed to develop and popularize a secure computer platform. TCG has released technology, called Protected Storage, that uses a security core module, called a Trusted Platform Module (TPM), to securely store private data.

Non-Patent Literature 1, formulated by the TCG Infrastructure WG, discloses technology for backing up, or migrating to another terminal, private data that is stored in a terminal using Protected Storage.

### [Citation List]

### [Non-Patent Literature]

[Non-Patent Literature 1] Interoperability Specification for Backup and Migration Services Version 1.0, Revision 1.0 (TCG Published)

### [Summary of Invention]

### [Technical Problem]

Version 1.2 of TPM specifications, mainly for PCs, has already been formulated and published, but specifications continue to be debated in order to develop and apply the latest, up-to-date encryption algorithms. Furthermore, the above TCG specifications were formulated mainly with PCs in mind, but a broader range of specifications for mobile devices are now being considered, such as for cellular phones or PDAs. Even as specifications are being considered, encryption algorithms progress, and different encryption algorithms may be adopted for different targets.

Accordingly, there is demand for development of technology that contributes to further advances in the above technology for backing up or migrating private data to another terminal.

To respond to this demand, it is an object of the present invention to provide a key migration device, key migration control method, and program that can securely and reliably control migration of keys.

### [Solution to Problem]

To achieve the above-described object, one aspect of the present invention is a key migration device for controlling migration of keys from a key recording device to an output destination device, the key recording device having recorded thereon a collection of keys including a key generated by a key generation device, the key migration device comprising: a receiving unit operable to receive, from the output destination device, a request to acquire a key recorded on the key recording device; an acquisition unit operable, upon receipt of the request, to acquire a generation level and an output destination level, the generation level being a security level of the key generation device, and the output destination level being a security level of the output destination device; a determination unit operable to determine whether a relationship between the generation level and the output destination level fulfills a predetermined condition; and a control unit operable, regardless of a security level of the key recording device, to output the key generated by the key generation device, from among the collection of keys, to the output destination device when the relationship between the generation level and the output destination level fulfills the predetermined condition, and to prohibit output of the key generated by the key generation device when the relationship between the generation level and the output destination level does not fulfill the predetermined condition.

### [Advantageous Effects of Invention]

According to this aspect, when the relationship between the generation level and the output destination level fulfills the predetermined condition, the key migration device outputs, from among the collection of keys, the key generated by the key generation device to the output destination device regardless of the security level of the key recording device. When the relationship between the generation level and the output destination level does not fulfill the predetermined condition, the key migration device prohibits output, from among the collection of keys, of the key generated by the key generation device to the output destination device regardless of the security level of the key recording device.

Accordingly, even when the key migration device transfers the key generated by the key generation device to an output destination device via a device (key recording device) having a different security level than the key generation device, the key migration device is not required to take the security level of the key recording device into account, but rather determines whether to permit output of the key in accordance with the security level of the key generation device, i.e. the security level at the time the key was generated. In other words, the key migration device has the highly advantageous effect of being able to accurately determine whether a key should be output to an output destination device without being influenced by the security level of the key recording device, but rather in accordance with the security level that should in fact be taken into consideration, i.e. the security level at the time of generation.

### [Brief Description of Drawings]

Fig. 1 shows the overall configuration of a migration system 1 in Embodiment 1 of the present invention.
Fig. 2 shows the configuration of a first electronic terminal 3011.
Fig. 3 shows the configuration of an information management certificate 211.
Fig. 4 shows the configuration of a conformance certificate 212.
Fig. 5 shows the configuration of a data strength certificate 3101.
Fig. 6 shows the configuration of a migration authority 101.
Fig. 7 shows the configuration of a migration package management table 3301.
Fig. 8 shows the configuration of an encryption strength table 701.
Fig. 9 shows the configuration of an authentication level determination table 801.
Fig. 10 shows the configuration of encryption parameters 1201.
Fig. 11 shows the configuration of an example of regeneration of a migration package 1301 and the configuration of encryption parameters 1302.
Fig. 12 shows the configuration of an example of regeneration of a migration package 1401 and the configuration of encryption parameters 1402.
Fig. 13 shows the configuration of an example of regeneration of a migration package 1501 and the configuration of encryption parameters 1502.
Fig. 14 shows operational procedures when the first electronic terminal 3011 uploads private data to the migration authority 101. Fig. 14 mainly shows the relationship between sending and receiving of data between the first electronic terminal 3011 and the migration authority 101.
Fig. 15 shows operational procedures when the first electronic terminal 3011 uploads private data to the migration authority 101. Fig. 15 mainly shows details on the flow of each process in chronological order.
Fig. 16 shows operational procedures when a second electronic terminal 3012 downloads private data from the migration authority 101. Fig. 16 mainly shows the relationship between sending and receiving of data between the second electronic terminal 3012 and the migration authority 101.
Fig. 17 shows operational procedures when the second electronic terminal 3012 downloads private data from the migration authority 101. Fig. 17 mainly shows details on the flow of each process in chronological order.
Fig. 18 shows operational procedures of a migration permission determination unit 504 in the migration authority 101.
Fig. 19 shows the overall configuration of a migration system 3 in Embodiment 2 of the present invention.
Fig. 20 shows the configuration of a fourth electronic terminal 3711.
Fig. 21 shows the configuration of private data 3901 stored in a storage region 207 of a fifth electronic terminal 3712.
Fig. 22 shows the configuration of private data strength attributes 3902 stored in the storage region 207 of the fifth electronic terminal 3712.
Fig. 23 shows the configuration of private data 3911 and of private data strength attributes 3912 stored in the fourth electronic terminal 3711, as well as the configuration of private data 3901 and private data strength attributes 3902 stored in the fifth electronic terminal 3712.
Fig. 24 shows procedures for adding data to an electronic terminal.
Fig. 25 shows the configuration of a migration package management table 4001.
Fig. 26 shows operational procedures when the fourth electronic terminal 3711 uploads private data to the migration authority 3710.
Fig. 27 shows operational procedures when the fifth electronic terminal 3712 downloads private data from the migration authority 3710.
Fig. 28 shows detailed operations by which permission for migration is determined.
Fig. 29 shows data 4401 before migration, which indicates a migration package 4401a and the status of a corresponding attribute package 4401b before migration, as well as data 4402 after migration, which indicates a migration package 4402a and the status of a corresponding attribute package 4402b after migration. Fig. 29 also shows the configuration of encryption parameters 4403.
Fig. 30 shows operational procedures by which the migration permission determination unit 504 and a migration package regeneration unit 505 in the migration authority 3710 regenerate a migration package.
Fig. 31 shows operational procedures of the migration authority 101, which is a key migration device in the application example in Embodiment 1.
Fig. 32 shows operational procedures of the migration authority 3710, which is a key migration device in the first application example in Embodiment 2.
Fig. 33 shows operational procedures of the migration authority 3710, which is a key migration device in the second application example in Embodiment 2.
Fig. 34 shows detailed operations by which permission for migration is determined in the Modification.

### [Description of Embodiments]

According to an aspect recited in claim 1, a key migration device for controlling migration of keys from a key recording device to an output destination device, the key recording device having recorded thereon a collection of keys including a key generated by a key generation device, comprises: a receiving unit operable to receive, from the output destination device, a request to acquire a key recorded on the key recording device; an acquisition unit operable, upon receipt of the request, to acquire a generation level and an output destination level, the generation level being a security level of the key generation device, and the output destination level being a security level of the output destination device; a determination unit operable to determine whether a relationship between the generation level and the output destination level fulfills a predetermined condition; and a control unit operable, regardless of a security level of the key recording device, to output the key generated by the key generation device, from among the collection of keys, to the output destination device when the relationship between the generation level and the output destination level fulfills the predetermined condition, and to prohibit output of the key generated by the key generation device when the relationship between the generation level and the output destination level does not fulfill the predetermined condition.

In the key migration device according to an aspect recited in claim 2, the collection of keys may include, along with the key generated by the key generation device, an additional key generated by the key recording device. With the predetermined condition designated as a first predetermined condition, the control unit may further determine whether a relationship between a recording level, which is a security level of the key recording device, and the output destination level fulfills a second predetermined condition, and when the relationship between the generation level and the output destination level fulfills the first predetermined condition, but the relationship between the recording level and the output destination level does not fulfill the second predetermined condition, may output the collection of keys except for the additional key to the output destination device.

According to this aspect, the key migration device determines whether the relationship between the recording level and the output destination level fulfills the second predetermined condition. When the relationship between the generation level and the output destination level fulfills the first predetermined condition, but the relationship between the recording level and the output destination level does not fulfill the second predetermined condition, the key migration device outputs the collection of keys except for the additional key to the output destination device.

Accordingly, while keys are recorded on the key recording device, if the key recording device adds an additional key to the collection of keys that does not fulfill a condition, the key migration device excludes the additional key from the target of output. When outputting the collection of keys, any additional key that does not fulfill the condition can thus be prevented from being output to the output destination device.

In the key migration device according to an aspect recited in claim 3, even when the relationship between the generation level and the output destination level does not fulfill the first predetermined condition, when the relationship between the recording level and the output destination level fulfills the second predetermined condition, the control unit may further output the additional key to the output destination device.

According to this aspect, even when the relationship between the generation level and the output destination level does not fulfill the first predetermined condition, when the relationship between the recording level and the output destination level fulfills the second predetermined condition, the key migration device outputs the additional key to the output destination device.

Accordingly, when the collection of keys includes both keys generated by a generation device that do not fulfill a condition and an additional key, generated by a key recording device, that does fulfill a condition, the condition-fulfilling additional key can be extracted separately from the collection of keys and output.

In the key migration device according to an aspect recited in claim 4, the collection of keys recorded on the key recording device may further include, in addition to the key generated by the key generation device, an additional key generated by a key adding device that differs from the key generation device and the key recording device. With the predetermined condition designated as a first predetermined condition, the control unit may further determine whether a relationship between the output destination level and an additional level, which is a security level of the key adding device, fulfills a second predetermined condition, and when the relationship between the generation level and the output destination level fulfills the first predetermined condition, but the relationship between the additional level and the output destination level does not fulfill the second predetermined condition, may output the collection of keys except for the additional key to the output destination device.

According to this aspect, the key migration device determines whether the relationship between the additional level, which is the security level of the key adding device, and the output destination level fulfills the second predetermined condition, and when the relationship between the generation level and the output destination level fulfills the first predetermined condition, but the relationship between the additional level and the output destination level does not fulfill the second predetermined condition, the key migration device outputs the collection of keys except for the additional key to the output destination device.

Accordingly, when the collection of keys includes an additional key, generated by a key adding device, that does not fulfill a condition, the key migration device excludes the additional key from the target of output. When outputting the collection of keys, any additional key that does not fulfill the condition can thus be prevented from being output to the output destination device.

In the key migration device according to an aspect recited in claim 5, even when the relationship between the generation level and the output destination level does not fulfill the first predetermined condition, when the relationship between the additional level and the output destination level fulfills the second predetermined condition, the control unit may further output the additional key to the output destination device.

According to this aspect, even when the relationship between the generation level and the output destination level does not fulfill the first predetermined condition, when the relationship between the additional level and the output destination level fulfills the second predetermined condition, the key migration device outputs the additional key to the output destination device.

Accordingly, when the collection of keys includes both keys generated by the key generation device that do not fulfill a condition and a key, generated by a key adding device, that does fulfill a condition, the additional key, generated by the key adding device, that fulfills the condition can be extracted separately from the collection of keys and output.

In the key migration device according to an aspect recited in claim 6, the acquisition unit may further acquire a recording level that is a security level of the key recording device. The determination unit may determine whether a relationship between the recording level and the output destination level fulfills another predetermined condition, and when the other predetermined condition is not fulfilled, determine whether a relationship between the generation level and the output destination level fulfills a second predetermined condition. The control unit may output the key generated by the key generation device when the relationship between the generation level and the output destination level fulfills the second predetermined condition.

In the key migration device according to an aspect recited in claim 7, the predetermined condition may be fulfilled when the output destination level is equal to or higher than a security level with which the output destination level is compared.

According to this aspect, the predetermined condition is fulfilled when the output destination level is equal to or higher than a security level with which the output destination level is compared.

Accordingly, keys are only output to an output destination device having a security level equal to or higher than the security level of the device that generated the keys. Keys can thus be prevented from being transferred to an environment with lower security than when the keys were generated.

In the key migration device according to an aspect recited in claim 8, the key migration device and the key recording device may be the same device.

### 1. Embodiment 1

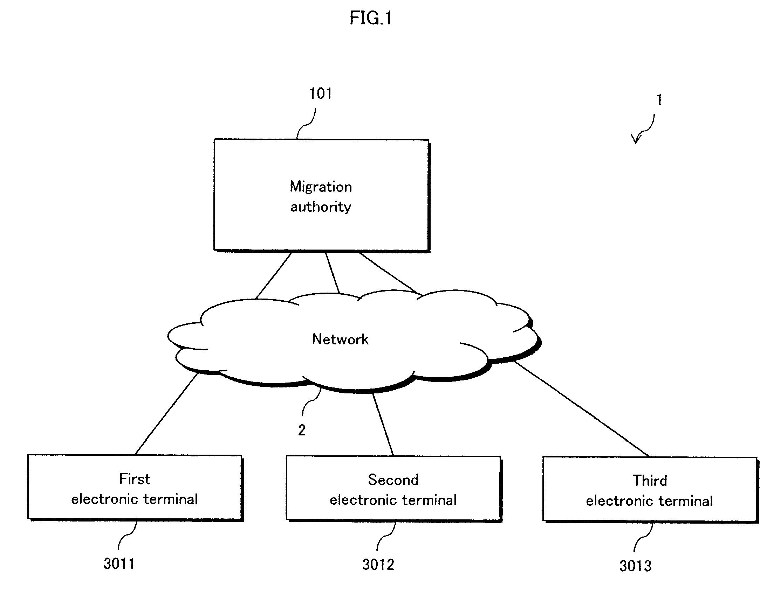

Embodiment 1 of the present invention is described below with reference to the drawings. 1.1 Migration System 1
Fig. 1 shows the overall configuration of a migration system 1 in Embodiment 1 of the present invention.

As shown in Fig. 1, the migration system 1 includes a migration authority 101, first electronic terminal 3011, second electronic terminal 3012, and third electronic terminal 3013. The migration authority 101, first electronic terminal 3011, second electronic terminal 3012, and third electronic terminal 3013 are connected via a network 2.

The migration authority 101 communicates with each electronic terminal via the network to provide the service of migration of private data. In Embodiment 1, the migration authority 101 is a server that manages migration of private data between electronic terminals.

The first electronic terminal 3011 is a computer system that includes elements such as a CPU and RAM. In general, this computer system is implemented as a PC, cellular phone, PDA, etc., but the computer system is not limited to these apparatuses. The first electronic terminal 3011 is provided with a secure platform that centers on a security module called a Trusted Platform Module (TPM) as established by the TCG. The TPM supports technology called Protected Storage for securely storing private data. In Protected Storage, data is managed in a tree structure. Data allocated to a leaf of the tree is protected by being successively encrypted with keys allocated to the root and to nodes between the root and the leaf. A public key encryption key (root key), called an asymmetric Storage Root Key (SRK), is typically allocated to the root of the tree structure.

The second electronic terminal 3012 is a computer system that includes elements such as a CPU and RAM. In general, this computer system is implemented as a PC, cellular phone, PDA, etc., but the computer system is not limited to these apparatuses. Like the first electronic terminal 3011, the second electronic terminal 3012 is provided with a secure platform that centers on a security module called a Trusted Platform Module (TPM) as established by the TCG Like the first electronic terminal 3011, the second electronic terminal 3012 supports Protected Storage technology and manages data in a tree structure. However, rather than being a public key encryption key, the root key is, for example, a secret key encryption key called a symmetric SRK.

Like the first electronic terminal 3011 and the second electronic terminal 3012, the third electronic terminal 3013 is also an electronic terminal.

### 1.2 Application Example of Migration System 1

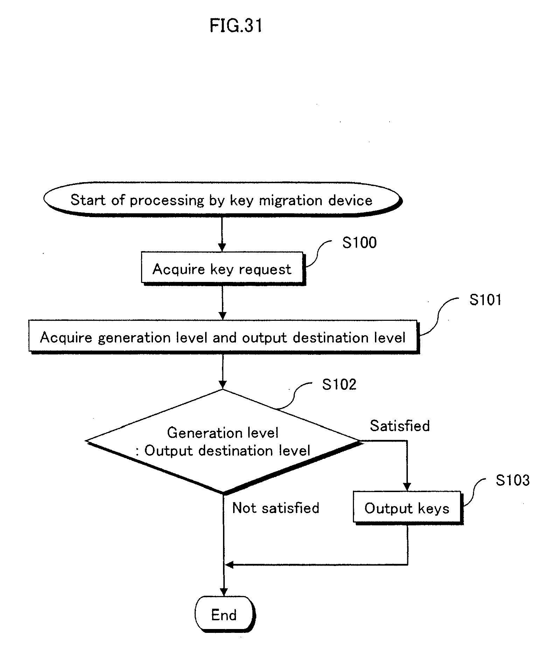

The following describes an application example of the migration system 1 with reference to Fig. 31.

The first electronic terminal 3011 is, for example, the device that generates private data. Private data is, for example, a collection of keys composed of a plurality of keys. The first electronic terminal 3011 is, for example, the key generation device that generates the collection of keys.

The first electronic terminal 3011 uploads private data to the migration authority 101 via the network 2, and the second electronic terminal 3012 downloads the private data from the migration authority 101 via the network 2.

The second electronic terminal 3012 thus receives private data, for example a collection of keys, from the first electronic terminal 3011, i.e. a key generation device, and stores the collection of keys internally. The second electronic terminal 3012 is thus a key recording device that records a collection of keys generated by a key generation device.

The third electronic terminal 3013 acquires the collection of keys from the second electronic terminal 3012 as follows. The third electronic terminal 3013 is an output destination device to which the collection of keys is ultimately output.

The second electronic terminal 3012 uploads the private data, i.e. the collection of keys, to the migration authority 101 via the network 2.

The migration authority 101 is a key migration device that manages migration of the collection of keys. The migration authority 101 includes: a receiving unit operable to receive, from the third electronic terminal 3013, a request to acquire a collection of keys recorded on the second electronic terminal 3012 (S 100); an acquisition unit operable to acquire a generation level and an output destination level, the generation level being a security level of the first electronic terminal 3011, and the output destination level being a security level of the third electronic terminal 3013 (S101); and a control unit operable, upon receiving from the third electronic terminal 3013 a request to acquire the collection of keys recorded on the second electronic terminal 3012, to determine whether a relationship between the generation level and the output destination level fulfills a predetermined condition (S102). When the relationship between the generation level and the output destination level fulfills the predetermined condition (S102: Yes), the control unit outputs, from among the collection of keys, a key generated by the first electronic terminal 3011 to the third electronic terminal 3013 regardless of a security level of the second electronic terminal 3012 (S103). When the relationship between the generation level and the output destination level does not fulfill the predetermined condition (S102: No), the control unit prohibits output, from among the collection of keys, of the key generated by the first electronic terminal 3011 to the third electronic terminal 3013 regardless of the security level of the second electronic terminal 3012.

As one example, the predetermined condition may be fulfilled when the output destination level is higher than or equal to a base security level (in this case, the generation level) and not fulfilled when the output destination level is lower than the base security level.

The third electronic terminal 3013 downloads the private data, i.e. the collection of keys, from the migration authority 101 via the network 2 in accordance with the condition and stores the collection of keys.

### 1.3 Electronic Terminal

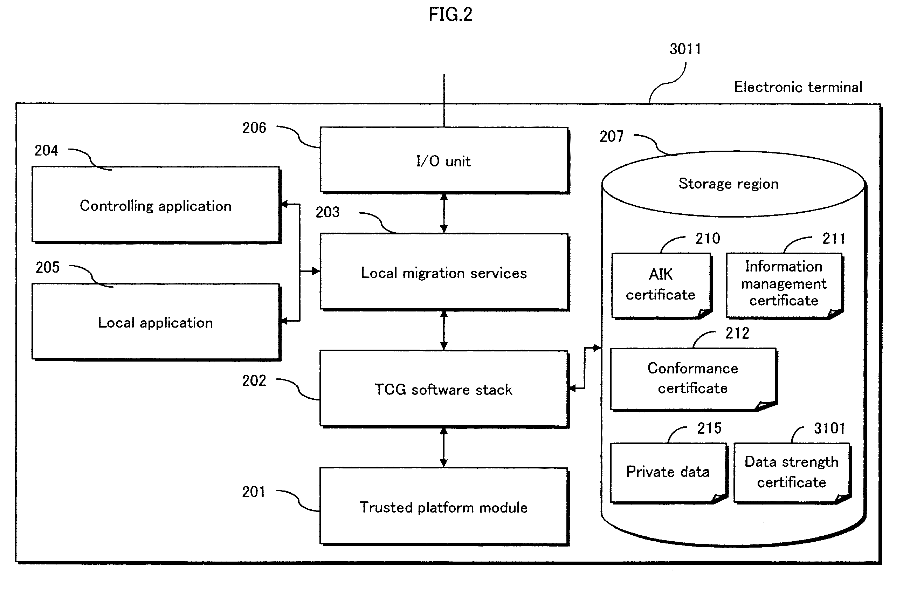

The following is a detailed description of the configuration of the first electronic terminal 3011 with reference to Fig. 2. Note that the second electronic terminal 3012 and the third electronic terminal 3013 have the same configuration as the first electronic terminal 3011, and therefore a description thereof is omitted.

Fig. 2 shows the configuration of the first electronic terminal 3011.

As shown in Fig. 2, the first electronic terminal 3011 is composed of a Trusted Platform Module 201, TCG software stack 202, local migration services 203, controlling application 204, local application 205, I/O unit 206, and storage region 207.

Specifically, the first electronic terminal 3011 is a computer system composed of a microprocessor, ROM, RAM, hard disk unit, etc. The RAM or the hard disk unit stores computer programs. The first electronic terminal 3011 fulfills its functions by the microprocessor operating in accordance with the computer programs.

### (1) Trusted Platform Module 201

The Trusted Platform Module 201 is a security module established by the TCG and comprises an encryption engine, non-volatile memory, etc. Details are recited in "TPM Main Part 1, 2, 3 Design Principles" and thus are omitted from this explanation.

Note that while the security module provided in the first electronic terminal 3011 is called a Trusted Platform Module (TPM), the name of this module is not limited in this way; the TCG Mobile Phone WG refers to an equivalent security module as a Mobile Trusted Module. Furthermore, the module is generally implemented via hardware that uses a semiconductor, but the module may also be implemented by software.

### (2) TCG Software Stack 202, local migration services 203, controlling application 204, local application 205, and I/O unit 206

The TCG Software Stack 202 is a unit storing a software library that provides services to a variety of applications running on a secure platform provided with the Trusted Platform Module 201. Details are recited in "TCG Software Stack (TSS) Specification Version 1.2 Level 1 Errata A" and thus are omitted from this explanation.

The Local Migration Services 203 is a module on the client side for implementing a service for migration of data. Details are recited in Non-Patent Literature 1 and thus are omitted from this explanation.

The Controlling Application 204 is a module on the client side for controlling migration processing within the client. Details are recited in Non-Patent Literature 1 and thus are omitted from this explanation.

The Local Application 205 is a general application that uses the service for migration of data. Possible examples include, but are not limited to, a Digital Rights Management (DRM) application that manages rights to digital content such as music or video, an address list application, an application for credit payment, etc.

The I/O unit 206 transfers data to and from the migration authority 101 via the network 2.

### (3) Storage Region 207

The storage region 207, as shown in the example in Fig. 2, stores an AIK certificate 210, information management certificate 211, conformance certificate 212, private data 215, data strength certificate 3101, etc. The storage region 207 is generally implemented by a HDD, flash memory, etc., but is not limited in this way and may be implemented by any element that has a function to store information.

### (AIK certificate 210)

The AIK certificate 210 is a certificate called an attestation identity key credential. In Embodiment 1, the AIK certificate 210 is issued by the migration authority 101. The AIK certificate 210 is used to confirm that, for example, the TPM holds the Attestation Identity Key (AIK). Details are recited in the "TCG Specification Architecture Overview" and thus are omitted from this explanation.

### (Information Management Certificate 211)

The information management certificate 211 is used to confirm the method for managing the private data 215. In Embodiment 1, the information management certificate 211 is issued by the migration authority 101. Details are recited in the "TCG Specification Architecture Overview".

Next, details regarding the information management certificate 211 are described.

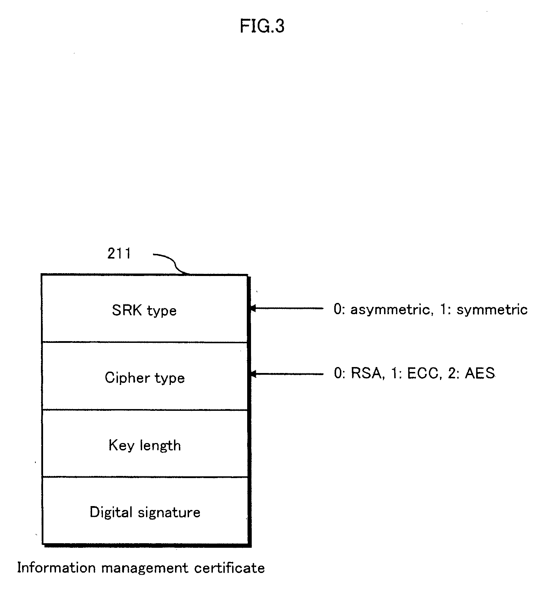

Fig. 3 shows the configuration of the information management certificate 211. The information management certificate 211 has a data structure composed of an SRK type, cipher type, key length, and digital signature.

The SRK type is a data type indicating whether the method for managing the private data uses public key encryption or secret key encryption. If the SRK type is "0", public key encryption is used, whereas if the SRK type is "1 ", secret key encryption is used.

The cipher type is a data type regarding the encryption algorithm used in the method for managing the private data. Examples of the encryption algorithm include Rivest Shamir Adleman (RSA) encryption, Elliptic Curve Cryptosystem (ECC) encryption, Advanced Encryption Standard (AES) encryption, etc., but the encryption algorithm is not limited to these examples. When the SRK type is "0", "1", or "2", the encryption algorithm is, respectively, RSA encryption, ECC encryption, and AES encryption.

The key length is a data type indicating the key length of the encryption key used in the method for managing the private data.

The digital signature is data yielded by encrypting, with the private key of the migration authority 101, a digest value obtained from data that is a concatenation of the SRK type, cipher type, and key length.

Note that the information management certificate 211 may further include data that indicates whether to permit updating of the key.

### (Conformance Certificate 212)

The conformance certificate 212 is an attribute certificate that certifies conformity with TCG assessment standards. The conformance certificate 212 is generally issued by the authority performing assessment. In Embodiment 1, the conformance certificate 212 is issued by the migration authority 101.

Note that while the AIK certificate 210, the information management certificate 211, and the conformance certificate 212 have been described as separate certificates, these may be combined to form one certificate.

Next, details regarding the conformance certificate 212 are described.

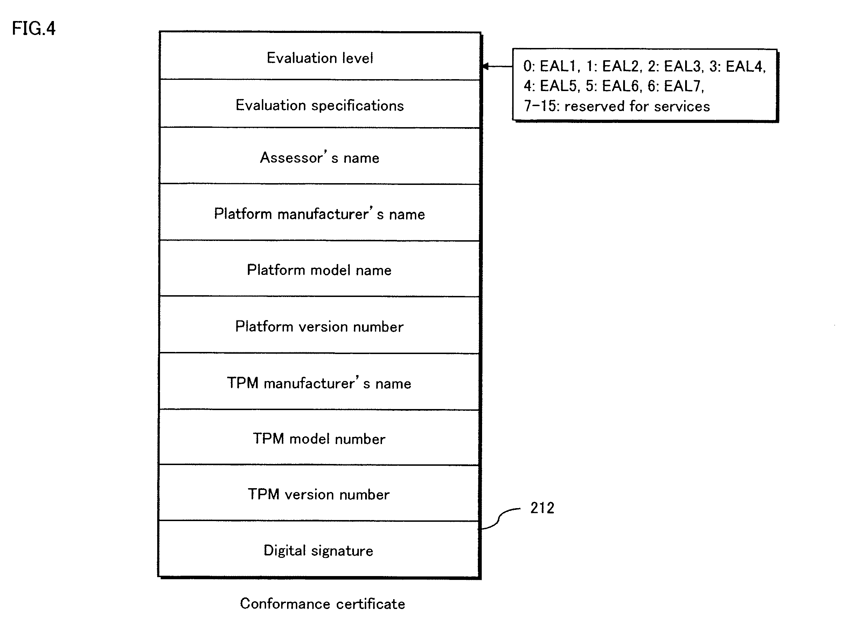

Fig. 4 shows the configuration of the conformance certificate 212. As shown in Fig. 4, the conformance certificate 212 is composed of an evaluation level, evaluation specifications, assessor's name, platform manufacturer's name, platform model name, platform version number, TPM manufacturer's name, TPM model number, TPM version number, and digital signature.

The evaluation level is data showing the evaluation level. This evaluation level is expressed as an approved level based on security assessment standards established by ISO/IEC 15408. EAL stands for Evaluation Assurance Level, and as the number after EAL increases, a higher level of assurance requirement can be cleared. Since "EAL4+" levels have been established, additions can be made over time in the form of data handled in this region. Also, this region is not only used at levels approved based on ISO/IEC 15408, but may also be used at any level established by the manager of the migration authority 101, such as the telecommunication carrier.

In this description, the evaluation level is also referred to as a security level.

The evaluation specifications are data identifying the specifications of security assessment standards used at the evaluation level. ISO/IEC15408 includes ISO/IEC 15408:1999 established in 1999, ISO/IEC15408:2005 established in 2005, etc., and therefore the specifications for assessment standards are identified by referring to this region.

Details on other data are recited in the "TCG Specification Architecture Overview" and thus are omitted from this explanation.

### (Private Data 215)

The private data 215 is a collection of private data managed using the Storage Root Key (SRK). The private data 215 also includes the Attestation Identity Key (AIK). Private data that is protected by an SRK as established by TCG is generally managed in a tree structure. Details are recited in the "TCG Specification Architecture Overview" and thus are omitted from this explanation.

Note that the private data includes a key. The private data may further include parameters indicating the time of generation or lifetime of the key.

### (Data Strength Certificate 3101)

The data strength certificate 3101 records terminal authentication level information for when the private data 215 is first generated.

Note that the data strength certificate 3101 is issued by the CA authority when the private data 215 is first generated. However, this timing may be the same as the AIK certificate 210, information management certificate 211, and conformance certificate 212, or the data strength certificate 3101 may be issued immediately before a migration package is uploaded to the migration authority 101 at the start of an actual migration process.

Furthermore, once it has been issued, the data strength certificate 3101 is inherited by the electronic terminal upon each migration and therefore does not need to be reissued. The data strength certificate 3101 may, however, be updated in accordance with assessment of the latest security strength.

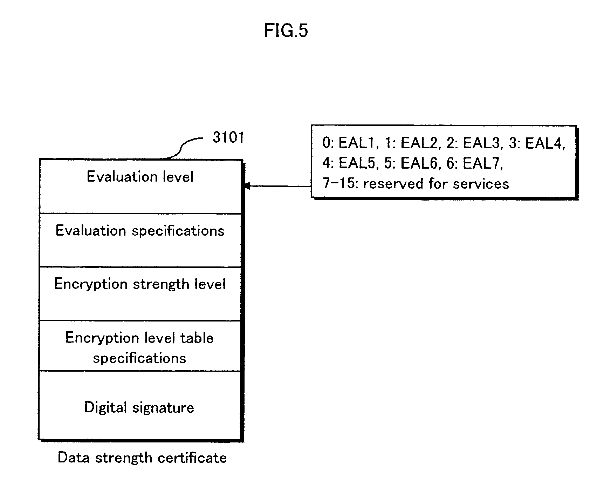

Fig. 5 shows the configuration of the data strength certificate 3101. As shown in Fig. 5, the data strength certificate 3101 has a data structure composed of an evaluation level, evaluation specifications, encryption strength level, encryption level table specifications, and digital signature.

The evaluation level is data showing the evaluation level. The evaluation level is expressed as an approved level based on security assessment standards established by ISO/IEC 15408. EAL stands for Evaluation Assurance Level, and as the number after EAL increases, a higher level of assurance requirement can be cleared. Since "EAL4+" levels have been established, additions over time can be added on as data handled in this region. Also, this region is not only used at levels approved based on ISO/IEC 15408, but may also be used at any level established by the manager of the migration authority 101, such as the telecommunication carrier.

The evaluation specifications are data identifying the specifications of security assessment standards used at the evaluation level. ISO/IEC15408 includes ISO/IEC 15408:1999 established in 1999, ISO/IEC155408:2005 established in 2005, etc., and therefore the specifications for assessment standards are identified by referring to this region.

The encryption strength level is data indicating an encryption strength level. The encryption strength level is determined using the encryption strength table 701 (described below), with reference to the encryption algorithm and key length of the Storage Root Key (SRK) used at the time of generation of the private data 215 for which the data strength certificate 3101 is issued. For example, when the RSA algorithm and a 2048-bit key are used in the SRK, a strength level of 2 is determined from the encryption strength table 701, and thus the value of this region is 2.

The encryption level table specifications are data indentifying the encryption strength table 701 used in determining the encryption strength level. When vulnerability is discovered in the encryption algorithm, the encryption strength table 701 is updated, and thus this region identifies the target specifications.

The digital signature is data for a digital signature generated based on a hash value of the results of combining the evaluation level, evaluation specifications, encryption strength level, and encryption level table specifications.

### 1.4 Migration Authority 101

Next, details are provided regarding the migration authority 101.

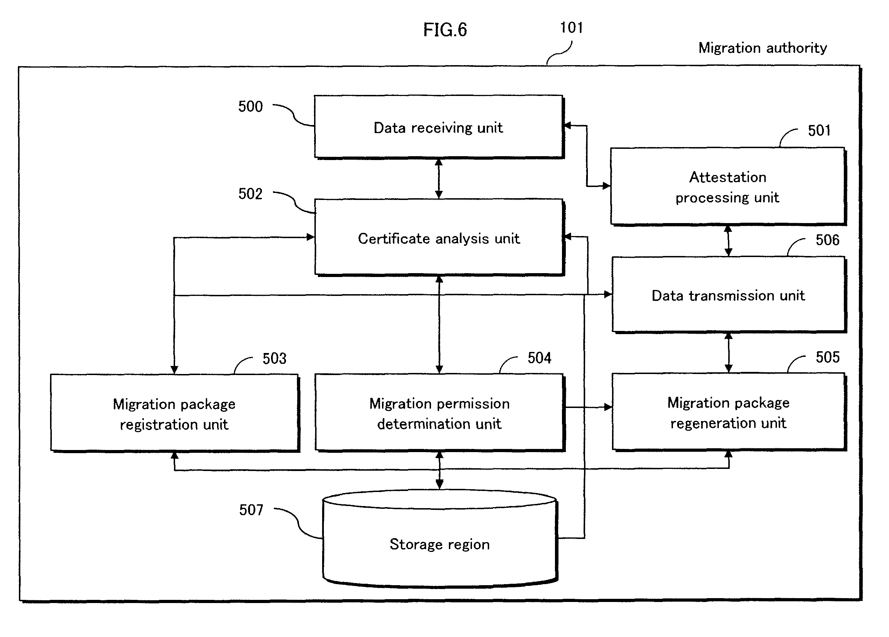

Fig. 6 shows the configuration of the migration authority 101.

As shown in Fig. 6, the migration authority 101 is composed of a data receiving unit 500, attestation processing unit 501, certificate analysis unit 502, migration package registration unit 503, migration permission determination unit 504, migration package regeneration unit 505, data transmission unit 506, and storage region 507.

Specifically, the migration authority 101 is a computer system composed of a microprocessor, ROM, RAM, hard disk unit, etc. The RAM or the hard disk unit stores computer programs. The migration authority 101 fulfills its functions by the microprocessor operating in accordance with the computer programs.

Via the network 2, the data receiving unit 500 receives, from the first electronic terminal 3011, the second electronic terminal 3012, and the third electronic terminal 3013, data necessary for a request to upload or download a migration package and for a variety of processes.

The attestation processing unit 501 performs an attestation process when each electronic terminal accesses the migration authority 101. If an electronic terminal is not authentic, the lack of authenticity can be discovered via the attestation process. Details on attestation are recited in the "TCG Specification Architecture Overview" and thus are omitted from this explanation. The results of attestation are transmitted via the data transmission unit 506 to the electronic terminal.

The certificate analysis unit 502 analyzes whether a certificate sent from an electronic terminal that is the source of migration, or from an electronic terminal that is the destination of migration, is authentic. The certificate analysis unit 502 is provided with an RSA encryption calculation function, a pair of a public key and a private key used in the RSA encryption calculation function, and a Secure Hash Algorithm (SHA) 1 calculation function.

Verification of authenticity of a certificate is performed via public key encryption as established in Public Key Infrastructure (PKI). Verification by PKI is standard, and thus a description thereof is omitted. Note that the method of verification is not limited in this way; any method that can certify authorization of a certificate is possible. Also note that a certificate may be issued by a source other than the migration authority 101. In Embodiment 1, however, all certificates are issued by the migration authority 101, and thus an explanation of certificates issued by a source other than the migration authority 101 is omitted.

The certificate analysis unit 502 transmits the results of certificate analysis to an electronic terminal via the data transmission unit 506.

The migration package registration unit 503 registers a migration package that stores private data transmitted from the first electronic terminal 3011, second electronic terminal 3012, and third electronic terminal 3013 in a migration package management table 3301, described below, and saves the migration package in the storage region 507.

In response to a migration package transmission request from the first electronic terminal 3011, second electronic terminal 3012, or third electronic terminal 3013, the migration permission determination unit 504 determines whether to grant permission to migrate by referring to an encryption master key (described below), encryption parameters 1201 (described below), the conformance certificate 212, and the information management certificate 211. For the determination, the encryption strength table 701, authentication level determination table 801, and migration package management table 3301, all described below, are used. When determining to permit migration, a migration package regeneration request is issued to the migration package regeneration unit 505.

Note that the migration permission determination unit 504 has been described as determining permission based on the migration package management table 3301, but a determination may be made by directly accessing information in a certificate.

Upon receiving from the migration permission determination unit 504, along with a migration package regeneration request, a migration package ID, encryption master key, encryption parameters, conformance certificate 212, and information management certificate 211, the migration package regeneration unit 505 regenerates a migration package by performing encryption conversion on a migration package recorded in the storage region 507. Details on the procedures for regeneration are described below. The regenerated migration package is transmitted to the data transmission unit 506.

Upon receiving a migration package from the migration package regeneration unit 505, the data transmission unit 506 transmits the migration package to each electronic terminal that is the destination of migration.

### (Migration Package Management Table 3301)

Next, details are provided regarding the migration package management table 3301.

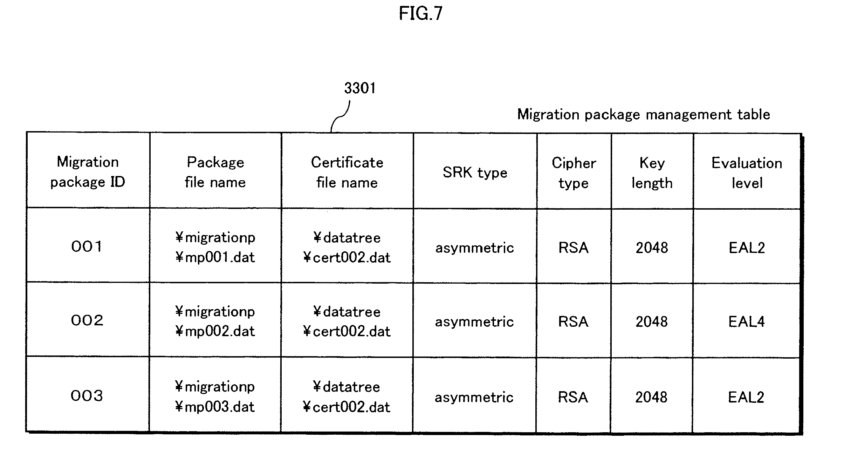

Fig. 7 shows the configuration of a migration package management table 3301.
The migration package management table 3301 includes: a migration package ID, which identifies a migration package within the migration authority 101; a file name with full path of a file in the storage region 507 storing the migration package; a certificate file name, which is a file name with full path of a data strength certificate; SRK type; cipher type; key length; and evaluation level. Note that the SRK type, cipher type, key length, and evaluation level are the same as the evaluation level in the information management certificate 211 and the conformance certificate 212, and therefore a description thereof is omitted.

### (Encryption Strength Table 701)

Next, details regarding the encryption strength table 701 are described.

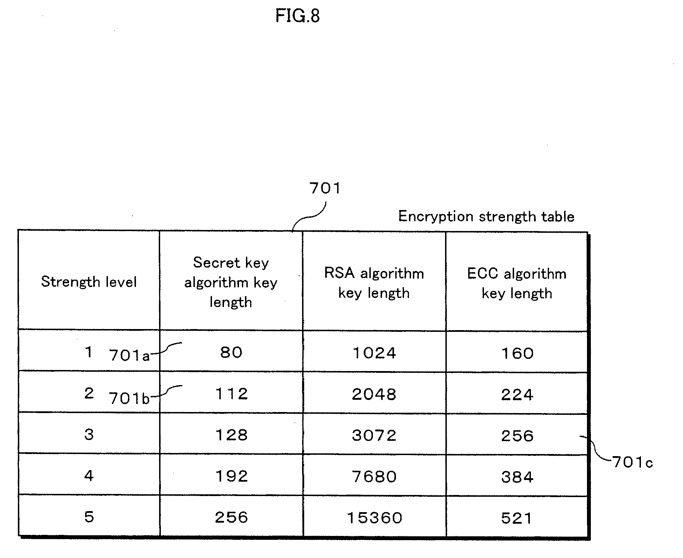

Fig. 8 shows the configuration of the encryption strength table 701. The encryption strength table 701 includes a plurality of pieces of encryption strength information. Each piece of encryption strength information is composed of parameters such as a strength level, secret key algorithm key length, RSA algorithm key length, and ECC algorithm key length. In other words, the encryption strength table 701 stores a plurality of key lengths for encrypted algorithms in correspondence with a plurality of strength levels.

In Fig. 8, for example, the encryption strength table 701 indicates that in order to satisfy strength level 1, a key length is 80 bits when using a secret key encryption algorithm, 1024 bits when using an RSA algorithm, and 160 bits when using an ECC algorithm.

Note that it is assumed in the encryption strength table 701 that no vulnerability has been discovered in the encryption algorithm. If vulnerability is discovered in the encryption algorithm, a longer key length is required. Accordingly, the encryption strength table 701 needs to be changed over time. The encryption strength table 701 may therefore be updated by a third party, such as an appropriate certificate authority. By updating the encryption strength table 701, it is possible to accommodate the latest encryption strength assessment and encryption algorithms.

In accordance with a determination algorithm, the migration permission determination unit 504 refers to the encryption strength table 701 to compare the strength level of the electronic terminal that is the destination of migration with the source of migration, granting permission for migration if the strength level of the destination is higher than or equal to the source. This is so as not to lower the strength level via migration.

Note that the determination algorithm may permit migration if the strength level of the destination of migration is higher than or equal to one level below the strength level of the source of migration. Migration may also be permitted only if the strength level of the destination of migration is one level above the strength level of the source of migration.

Also, the source of migration may be able to designate the determination algorithm used by the migration permission determination unit 504. Furthermore, the source of migration may be able to designate and to send the encryption strength table 701 and the authentication level determination table 801 used in determination.

### (Authentication Level Determination Table 801)

Next, details regarding the authentication level determination table 801 are described.

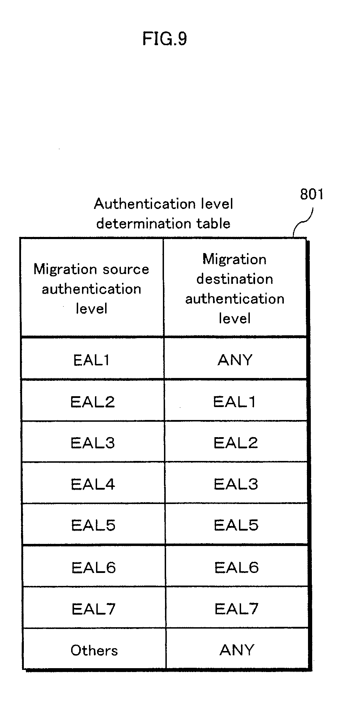

Fig. 9 shows the configuration of an authentication level determination table 801. The authentication level determination table 801 indicates a security policy on when the migration authority permits migration. The authentication level determination table 801 includes a plurality of pieces of determination information. Each piece of determination information is composed of a migration source authentication level and of a migration destination authentication level.

In the authentication level determination table 801, a migration source authentication level of EAL 1 indicates that the migration destination authentication level may be any value. A migration source authentication level of EAL2, EAL3, and EAL4 respectively indicate that the migration destination authentication level needs to be EAL 1 or higher, EAL2 or higher, and EAL3 or higher. A migration source authentication level of EAL5 or higher indicates that an equal authentication level is necessary at the migration destination. Furthermore, if the migration source authentication level is other than EAL1-7, the migration destination authentication level may be any value.

Note that if the migration source authentication level is between EAL2 and EAL4, a migration destination authentication level that is one authentication level lower has been described as acceptable, but alternatively an equal or higher authorization level may be required.

### (Encryption Parameters 1201)

The following is a detailed description of the configuration of the encryption parameters 1201.

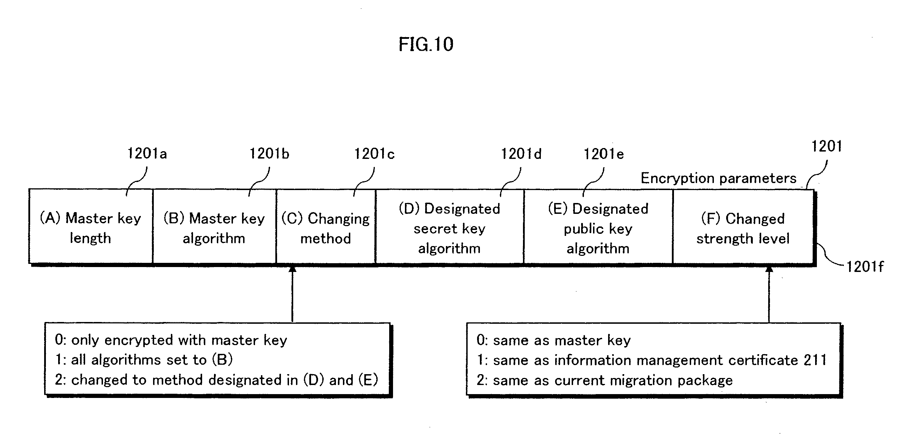

Fig. 10 shows the configuration of encryption parameters 1201 sent by an electronic terminal when the electronic terminal intends to download a migration package. The encryption parameters 1201 have a data structure including six pieces of data: a master key length 1201a, master key algorithm 1201b, changing method 1201c, designated secret key algorithm 1201 d, designated public key algorithm 1201e, and changed strength level 1201f.

(A) The master key length 1201 a is data indicating the key length of the master key sent in S3506 described below.

(B) The master key algorithm 1201b is data indicating the encryption algorithm when using the master key sent in S3506. The data indicates RSA, ECC, AES, or the like.

(C) The changing method 1201c is data indicating how a migration package is regenerated by the migration package regeneration unit 505. The following three parameters can be designated.

(1) Parameter 0: only data coming from a lower level than the master key is encrypted with the master key.

(2) Parameter 1: all encryption algorithms in the private data included in the migration package are unified as an algorithm designated by the master key algorithm.

(3) Parameter 2: among the encryption algorithms in the private data included in the migration package, a secret key format algorithm is changed to (D), an algorithm designated by the designated secret key algorithm. Also, a public key format algorithm is changed to (E), an algorithm designated by the designated public key algorithm.

(D) The designated secret key algorithm 1201d designates a secret key algorithm. The designated secret key algorithm is referred to when parameter 2 is designated in the (C) changing method.

(E) The designated public key algorithm 1201e designates a public key algorithm. The designated public key algorithm is referred to when parameter 2 is designated in the (C) changing method.

(F) The changed strength level 1201f indicates the method referred to when parameter 1 or parameter 2 is designated in the (C) changing method. The following three parameters can be designated.

(1) Parameter 0: The migration package is regenerated at the same strength level as the master key.

(2) Parameter 1: The migration package is regenerated at the same strength level as the information management certificate 211.

(3) Parameter 2: The migration package is regenerated at the same strength level as the current migration package.

### 1.4 Regeneration Operations

Next, an explanation is provided for regeneration operations by the migration package regeneration unit 505 when the migration package regeneration unit 505 is provided with certain encryption parameters 1201.

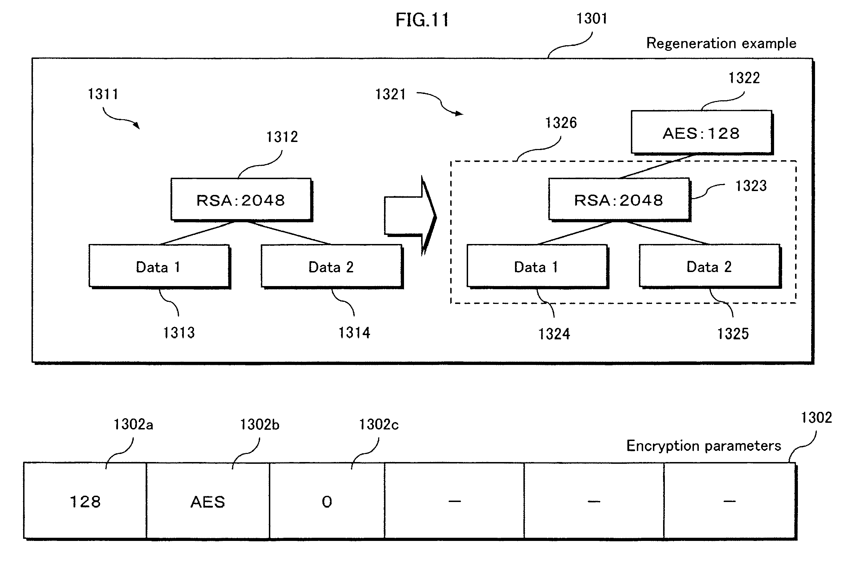

Figs. 11-13 show examples of regeneration operations when the migration package regeneration unit 505 in the migration authority 101 is provided with certain encryption parameters 1201.

Fig. 11 shows, when the migration package has the tree structure 1311 indicated to the left of the regeneration example 1301, results 1321 after regeneration when encryption parameters 1302 are provided. In this figure, the tree structure 1311 indicates that "data "1" 1313 and "data 2" 1314 are both encrypted via RSA using a key 1312 with a 2048-bit length. The results 1321 also indicate that "data 1" 1324 and "data 2" 1325 are both encrypted via RSA using a key 1323 with a 2048-bit length, and that the key 1323 is encrypted via AES using a key 1322 with a 128-bit length.

In this example, since the (C) changing method 1302c in the encryption parameters 1302 designates parameter 0, the migration package regeneration unit 505 only performs encryption with the master key.

Since the data 1312 in the uppermost level when the migration package with the tree structure 1311 is expanded indicates a pair of a 2048-bit public key and a private key in an RSA encryption algorithm, the migration package regeneration unit 505 decrypts this pair of keys with the private key corresponding to the MApubKey in the migration authority 101. The migration package regeneration unit 505 then encrypts the result obtained by decryption, using the 128-bit master key expressed by the (B) AES indicated by the master key algorithm 1302b, and the (A) master key length 1302a. The section 1326 surrounded by a dashed line, which is the tree structure 1321 to the right of the regeneration example 1301, excluding the master key 1322, is thus regenerated as the migration package.

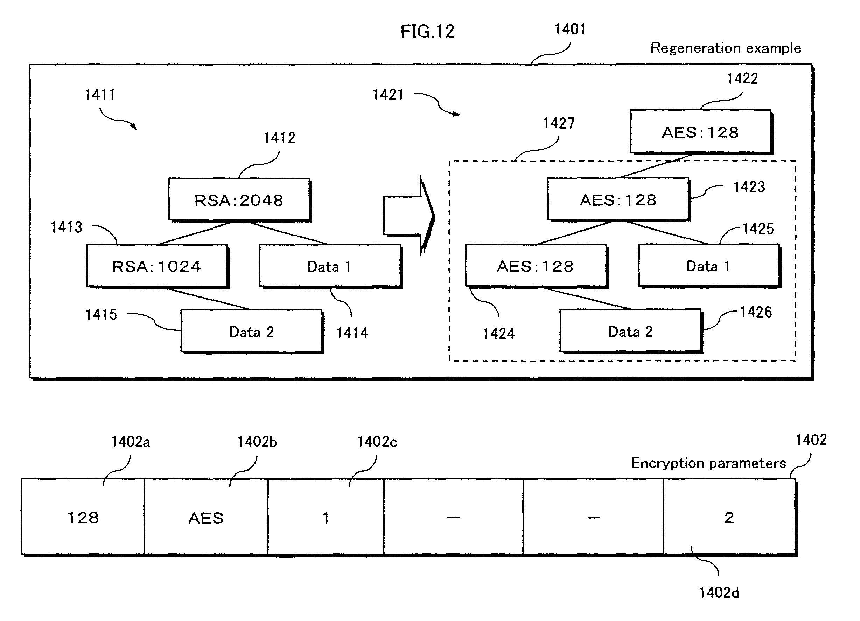

Fig. 12 shows, when the migration package has the tree structure 1411 indicated to the left of the regeneration example 1401, results 1421 after regeneration when encryption parameters 1402 are provided. In this figure, the tree structure 1411 indicates that "data 2" 1415 is encrypted via RSA using a key 1413 with a 1024-bit length, "data 1" 1414 is encrypted via RSA using a key 1412 with a 2048-bit length, and the key 1413 is encrypted via RSA using the key 1412 with a 2048-bit length. Also, the results 1421 indicate that "data 2" 1416 is encrypted via AES using a key 1424 with a 128-bit length, "data 1" 1425 is encrypted via AES using a key 1423 with a 128-bit length, the key 1424 is encrypted via AES using the key 1423 with a 128-bit length, and the key 1423 is encrypted via AES using a key 1422 with a 128-bit length.

In this example, since the (C) changing method 1402c in the encryption parameters 1402 designates parameter 1, the migration package regeneration unit 505 changes the overall encryption algorithm.

The procedures to do so are described below step by step.

Step 1: first, since the data 1412 in the uppermost level when the migration package is expanded indicates a pair of a 2048-bit public key and a private key in an RSA encryption algorithm, the migration package regeneration unit 505 decrypts this pair of keys with the private key corresponding to the MApubKey in the migration authority 101. Next, the RSA 1024-bit key pair 1413 and "data 1" 1414 are decrypted using the RSA 2048-bit private key. "Data 2" 1415 is decrypted using the RSA 1024-bit private key 1413.

Step 2: since the (F) changed strength level 1402d is parameter 2, the migration package regeneration unit 505 regenerates the migration package at the same strength level as the current migration package. The key length 701a of the private key algorithm corresponding to RSA 1024 bits is 80 bits as per the encryption strength table 701. However, since the smallest key length provided for in AES is 128 bits, a 128-bit key is generated and used to encrypt "data 2" 1426 via an AES algorithm. Furthermore, the key length 701b of the private key algorithm corresponding to RSA 2048 bits is 112 bits as per the encryption strength table 701. However, since the smallest key length provided for in AES is 128 bits, a 128-bit key is generated and used to encrypt the AES 128-bit key 1424 and "data 1" 1425 via an AES algorithm. Finally, the migration package regeneration unit 505 encrypts the key 1423 with the 128-bit master key expressed by the (B) AES indicated by the master key algorithm 1402b, and the (A) master key length 1402a. The section 1427 surrounded by a dashed line, which is the tree structure 1421 to the right of the regeneration example 1401, excluding the master key 1422, is thus regenerated as the migration package.

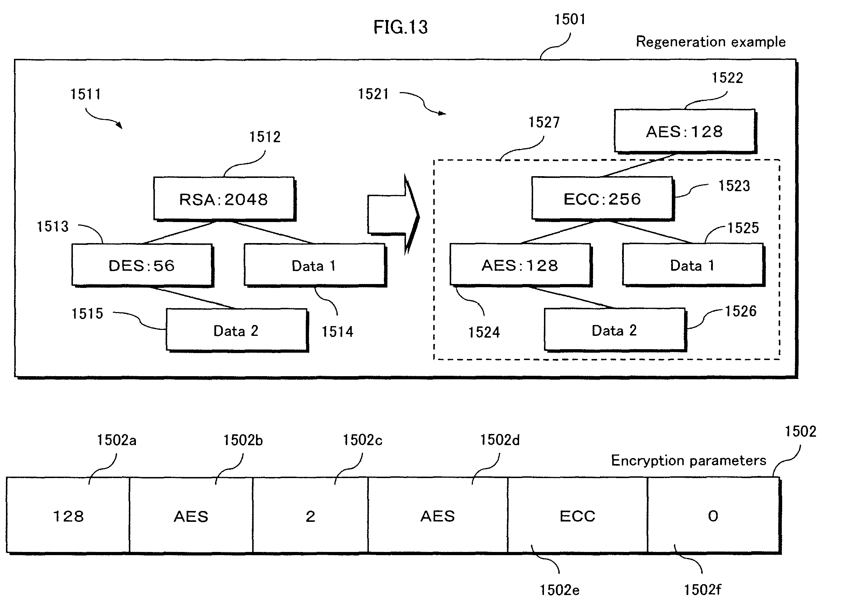

Fig. 13 shows, when the migration package has the tree structure 1511 indicated to the left of the regeneration example 1501, results 1521 after regeneration when encryption parameters 1502 are provided. In this figure, the tree structure 1511 indicates that "data 2" 1515 is encrypted via DES using a key 1513 with a 56-bit length, "data 1" 1514 is encrypted via RSA using a key 1512 with a 2048-bit length, and the key 1513 is encrypted via RSA using the key 1512 with a 2048-bit length. Also, the results 1521 indicate that "data 2" 1526 is encrypted via AES using a key 1524 with a 128-bit length, "data 1" 1525 is encrypted via ECC using a key 1523 with a 256-bit length, the key 1524 is encrypted via ECC using the key 1523 with a 256-bit length, and the key 1523 is encrypted via AES using a key 1522 with a 128-bit length.

In this example, since the encryption parameters 1502 designate parameter 2 for the (C) changing method 1502c, AES for the (D) designated secret key algorithm 1502d, and ECC for the (E) designated public key algorithm 1502e, the migration package regeneration unit 505 changes the overall secret key algorithm and public key algorithm.
The procedures to do so are described below step by step.

Step 1: first, since the data 1512 in the uppermost level when the migration package is expanded indicates a pair of a 2048-bit public key and a private key in an RSA encryption algorithm, the migration package regeneration unit 505 decrypts this pair of keys with the private key corresponding to the MApubKey in the migration authority 101. Next, the Data Encryption Standard (DES) 56-bit key pair 1513 and "data 1 "1514 are decrypted using the RSA 2048-bit private key. "Data 2" 1515 is decrypted using the DES 56-bit secret key 1513.

Step 2: Since the (F) changed strength level 1502f is parameter "0", regeneration is performed at the same strength level as the current master key. Since the DES is secret key encryption, the encryption algorithm used is changed to AES 128 bits as designated by the (D) designated secret key algorithm 1502d. Accordingly, a 128-bit key 1524 is generated and used to encrypt "data 2" 1526 via an AES algorithm. Next, since RSA is public key encryption, the encryption algorithm used is changed to ECC by the (E) designated public key algorithm. The ECC key length 701c corresponding to AES 128 bits, i.e. the master key, is 256 bits as per the encryption strength table 701. Accordingly, a 256-bit key 1523 is generated and used to encrypt the AES 128-bit key 1524 and "data 1" 1525 via an ECC algorithm. Finally, the migration package regeneration unit 505 encrypts the key 1523 with the 128-bit master key 1522 expressed by the (B) AES indicated by the master key algorithm 1502b and the (A) master key length 1502a. The section 1527 surrounded by a dashed line, which is the tree structure 1521 to the right of the regeneration example 1501, excluding the master key 1522, is thus regenerated as the migration package.

Note that the master key has been described as sent by the second electronic terminal, which downloads the migration package, but alternatively the master key may be generated by the migration authority 101.

### 1.5 Upload and Download Operations

The following describes upload and download operations.

### (1) Operational Procedures when Uploading Private Data

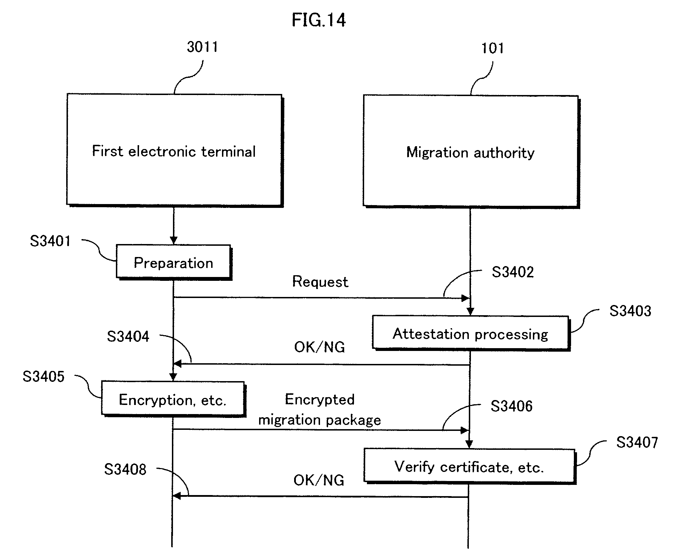

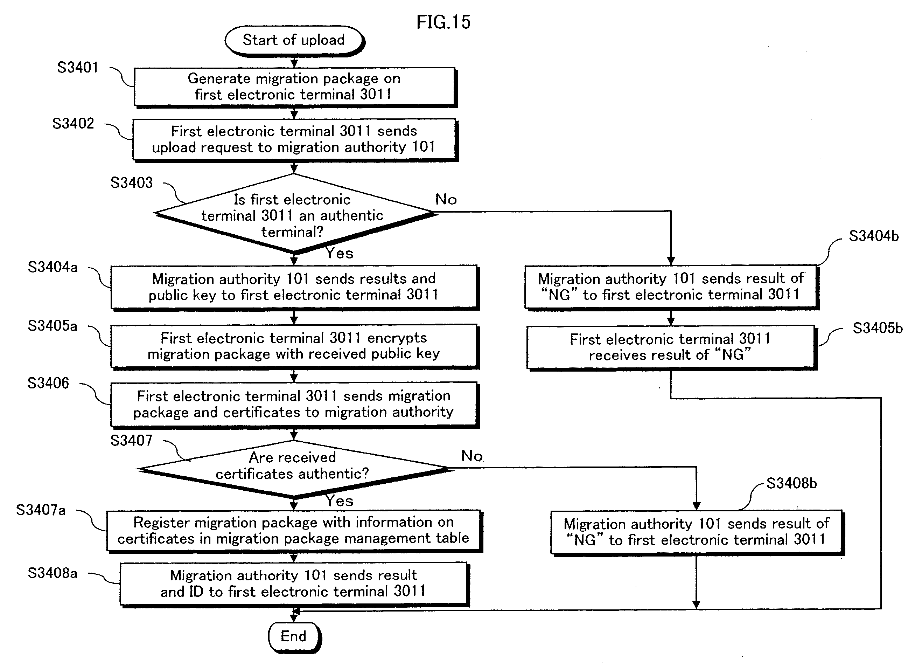

Figs. 14 and 15 show operational procedures when the first electronic terminal 3011 uploads private data to the migration authority 101. Note that Fig. 14 mainly shows the relationship between sending and receiving of data between the first electronic terminal 301 and the migration authority 101. On the other hand, Fig. 15 mainly shows details on the flow of each process in chronological order.

The following describes these operational procedures.

The first electronic terminal 301 prepares to upload private data, as shown below. The first electronic terminal 3011 aggregates a single piece or a plurality of pieces of private data for uploading, thus generating a collection of data called a migration package. Details on the migration package are recited in Non-Patent Literature 1 and thus are omitted from this explanation. The first electronic terminal 3011 also uses a function called integrity measurement, established by the TCG, to extract, from registers called platform configuration registers (PCR) in the Trusted Platform Module 201, digest values calculated for part or all of the software in the boot loader, OS, device driver, applications, etc. configuring the first electronic terminal 3011. The first electronic terminal 3011 then uses the AIK included in the private data 215 to provide digital signatures for the digest values in the Trusted Platform Module 201. Details on integrity measurement are recited in the "TCG Specification Architecture Overview" and thus are omitted from this explanation (S3401).

The first electronic terminal 3011 issues a request to upload a migration package to the migration authority 101. Specifically, the first electronic terminal 3011 sends the digest value, digital signature, and AIK certificate 210 along with the request to the migration authority 101. Sending a digest value and a digital signature is referred to as "integrity reporting". Details on integrity reporting are recited in the "TCG Specification Architecture Overview" and thus are omitted from this explanation. The migration authority 101 receives the request to upload a migration package from the first electronic terminal 3011 (S3402).

Upon receiving a request to upload a migration package from the first electronic terminal 3011, the data receiving unit 500 in the migration authority 101 sends the digest value, digital signature, and AIK certificate 210 received with the request to the attestation processing unit 501. The attestation processing unit 501 performs attestation processing to attest to whether the first electronic terminal 3011 is an authentic terminal. A terminal that is not authentic is a terminal that has been tampered with by a malicious user or a virus and operates unexpectedly (S3403).

In accordance with the results of S3403, the migration authority 101 operates as follows (S3404).

i) When the attestation processing unit 501 attests that the terminal is authentic (S3403: Yes), the migration authority 101 sends "OK" as the result of attestation and sends the public key (MApubKey) of the migration authority 101 to the first electronic terminal 3011 (S3404a).

ii) When it is discovered that the terminal is not authentic (S3403: No), the migration authority 101 sends "NG" (no good) as the result of attestation to the first electronic terminal 3011 (S3404b).

According to the information received from the migration authority 101, the first electronic terminal 3011 performs the following operations (S3405).

i) Upon receiving an "OK" from the migration authority 101, the first electronic terminal 3011 uses the MApubKey received at the same time to encrypt the migration package generated in S3401 (S3405a).

ii) Upon receiving an "NG" response from the migration authority 101 (S3405b), the first electronic terminal 3011 terminates processing.

Note that to handle the migration package securely, the migration package has been described as being encrypted with the MApubKey, but the present invention is not particularly limited in this way, as any method for handling the migration package securely is acceptable. For example, after performing mutual authentication, the first electronic terminal 3011 and the migration authority 101 may share a common key for temporary use, called a session key, and may perform encrypted communication using the session key. Also, instead of encrypting the entire migration package, only the master key may be encrypted using the MApubKey. The keys and the pieces of data in the migration package have already been encrypted using keys allocated to the respective parent nodes. Therefore, as long as the master key, which corresponds to the root, is encrypted with the MApubKey, the other keys and pieces of data are protected by the encryption used within the migration package.

The first electronic terminal 3011 sends the migration package encrypted in S3405a, conformance certificate 212, information management certificate 211, and data strength certificate 3101 to the migration authority 101. Note that the migration package, conformance certificate 212, information management certificate 211, and data strength certificate 3101 may be handled as separate pieces of data, or the certificates may all be included in the migration package. The migration authority 101 receives the migration package, conformance certificate 212, information management certificate 211, and data strength certificate 3101. Upon receipt of these pieces of data, the data receiving unit 500 transmits these pieces of data to the certificate analysis unit 502 (S3406).

The certificate analysis unit 502 verifies the authorization of these certificates and, in accordance with the verification results, operates as follows (S3407).

i) When the authorization of each certificate is confirmed (S3407: Yes), the certificate analysis unit 502 transmits the certificates to the migration package registration unit 503. Upon receiving the migration package, conformance certificate 212, information management certificate 211, and data strength certificate 3101 from the certificate analysis unit 502, the migration package registration unit 503 generates a migration package ID that uniquely identifies the migration package in the migration authority 101 and stores the migration package in the storage region 507. The migration package registration unit 503 also extracts data from the storage location and from each certificate and registers the extracted data in the migration package management table 3301 (S3407a). When registration in S3407a is complete, the migration authority 101 transmits a result of "OK", as well as the migration package ID, to the first electronic terminal 3011 via the data transmission unit 506 (S3408a).

ii) When any of the certificates is discovered not to be authentic (S3407: No), the certificate analysis unit 502 returns a result of "NG" via the data transmission unit 506 (S3408b).

### (2) Operations When Downloading Private Data

Next, an explanation is provided for operations to download private data in Embodiment 1.

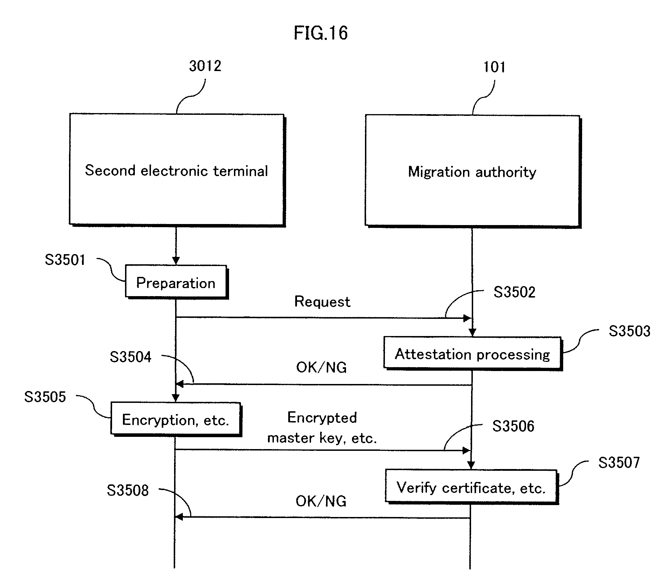

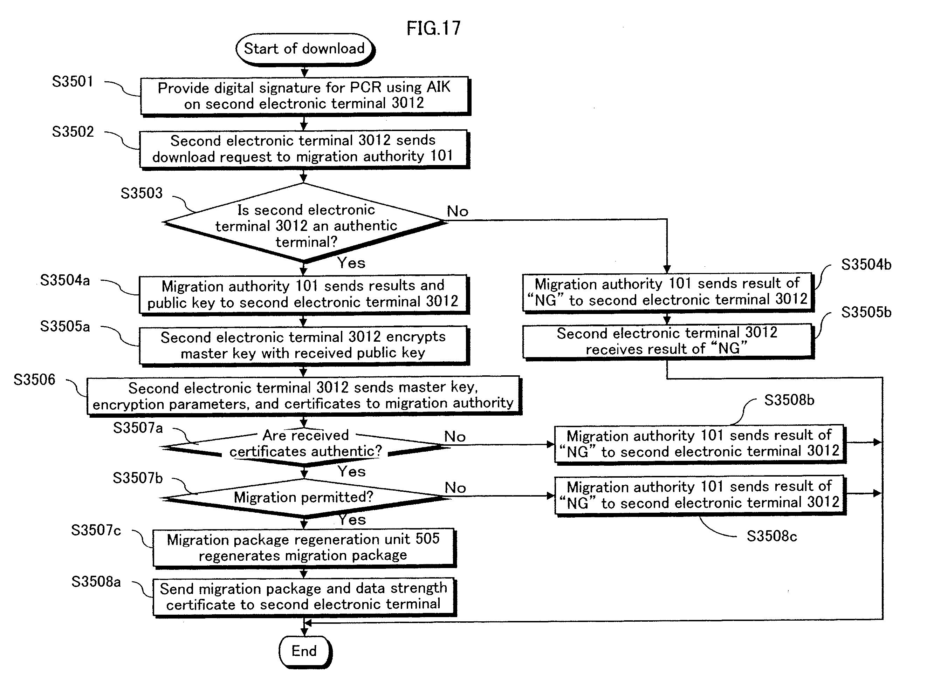

Figs. 16 and 17 show operational procedures when the second electronic terminal 3012 downloads private data from the migration authority 101. Note that Fig. 16 mainly shows the relationship between sending and receiving of data between the second electronic terminal 3012 and the migration authority 101. On the other hand, Fig. 17 mainly shows details on the flow of each process in chronological order.

The following describes these operational procedures.

The second electronic terminal 3012 prepares to download a migration package, as shown below. The second electronic terminal 3012 uses a function called integrity measurement, established by the TCG, to extract, from registers called platform configuration registers (PCR) in the Trusted Platform Module 201, digest values calculated for part or all of the software in the boot loader, OS, device driver, applications, etc. configuring the second electronic terminal 3012. The second electronic terminal 3012 then uses the AIK included in the private data 215 to provide digital signatures for the digest values in the Trusted Platform Module 201 (S3501).

The second electronic terminal 3012 issues a request to download a migration package from the migration authority 101. Specifically, the second electronic terminal 3012 sends the digest value, digital signature, and AIK certificate 210 along with the request to the migration authority 101. The migration authority 101 receives the request to download a migration package from the second electronic terminal 3012 (S3502).

Upon receiving a request to download a migration package from the second electronic terminal 3012, the data receiving unit 500 in the migration authority 101 sends the digest value, digital signature, and AIK certificate 210 received with the request to the attestation processing unit 501. The attestation processing unit 501 performs attestation processing to attest to whether the second electronic terminal 3012 is an authentic terminal (S3503).

In accordance with the results of S3503, the migration authority 101 operates as follows (S3504).

i) When the attestation processing unit 502 attests that the terminal is authentic (S3503: Yes), the migration authority 101 sends "OK" as the result of attestation and sends the public key (MApubKey) of the migration authority 101 to the second electronic terminal 3012 (S3504a).

ii) When the terminal is discovered not to be authentic (S3503: No), the migration authority 101 sends "NG" as the result of attestation to the second electronic terminal 3012 (S3504b).

According to the information received from the migration authority 101, the second electronic terminal 3012 performs the following operations (S3505).

i) When receiving an "OK" result from the migration authority 101, the second electronic terminal 3012 encrypts the master key with the MApubKey received along with the "OK" result. The master key is the key used to encrypt private data at the top of a tree structure that forms when expanding a migration package (S3505a).

ii) Upon receiving a "NG" response from the migration authority 101 (S3505b), the second electronic terminal 3012 terminates processing.

Note that in order to handle the master key securely, the master key has been described as being encrypted with the MApubKey, but the present invention is not particularly limited in this way, as any method for handling the master key securely is acceptable. For example, after performing mutual authentication, the second electronic terminal 3012 and the migration authority 101 may share a common key for temporary use, called a session key, and may perform encrypted communication using the session key. Also, instead of encrypting the entire migration package, only the master key may be encrypted using the MApubKey. The keys and the pieces of data in the migration package have already been encrypted using keys allocated to the respective parent nodes. Therefore, as long as the master key, which corresponds to the root, is encrypted with the MApubKey, the other keys and pieces of data are protected by the encryption used within the migration package.

The second electronic terminal 3012 transmits, to the migration authority 101, the migration package ID of the migration package to download, the master key encrypted in S3505, the encryption parameters used when regenerating the migration package, the conformance certificate 212, the information management certificate 211, and the data strength certificate 3101. The migration authority 101 receives the migration package ID, encrypted master key, encryption parameters, conformance certificate 212, information management certificate 211, and data strength certificate 3101. Upon receipt of these pieces of data, the data receiving unit 500 transmits these pieces of data to the certificate analysis unit 502 (S3506).

The certificate analysis unit 502 verifies the authorization of these certificates (S3507a) and, in accordance with the verification results, operates as follows (S3507).

i) When the authorization of each certificate is confirmed (S3507a: Yes), the certificate analysis unit 502 transmits the migration package ID, encrypted master key, encryption parameters, conformance certificate 212, information management certificate 211, and data strength certificate 3101 to the migration permission determination unit 504 (S3507b).

ii) When any of the certificates is discovered not to be authentic (S3507a: No), the certificate analysis unit 502 returns a result of "NG" via the data transmission unit 506 to the second electronic terminal 3012 (S3508b).

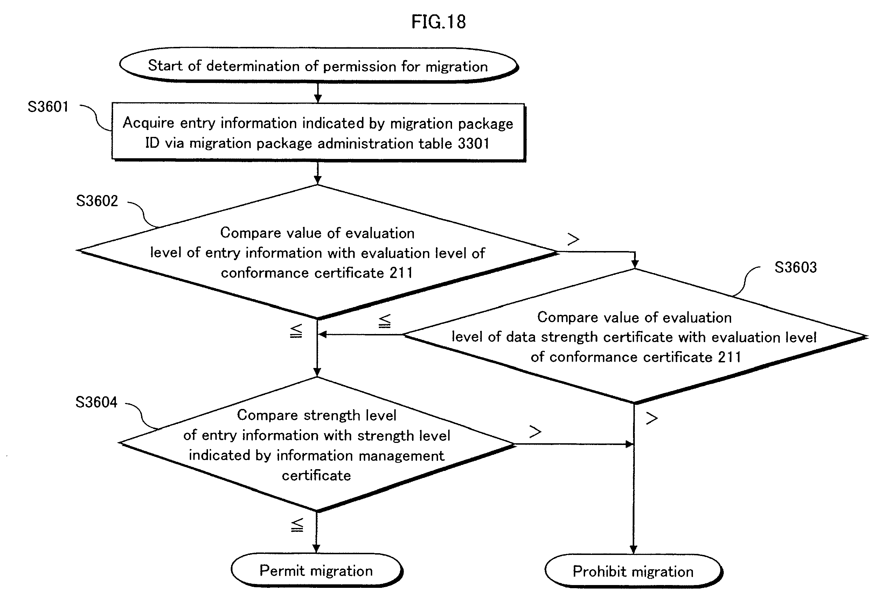

The migration permission determination unit 504 receives, from the certificate analysis unit 502, the migration package ID, encrypted master key, encryption parameters 1201, conformance certificate 212, information management certificate 211, and data strength certificate 3101 and then determines whether to permit migration. Operations by which the migration permission determination unit 504 performs this determination are described below with reference to Fig. 18. According to the result of the determination, the migration permission determination unit 504 operates as follows (S3507b).

i) If the result of determination is "OK", i.e. if migration is permitted (S3507b: Yes), the migration permission determination unit 504 transmits the migration package ID, encrypted master key, encryption parameters, conformance certificate 212, information management certificate 211, and data strength certificate 3101 along with a migration package regeneration request to the migration package regeneration unit 505 (S3507c).

ii) If the result of determination is "NG", i.e. if migration is not permitted (S3507b: No), the migration permission determination unit 504 returns a result of "NG" to the second electronic terminal 3012 via the data transmission unit 506 (S3508c).

The migration package regeneration unit 505 receives the migration package ID, encrypted master key, encryption parameters, conformance certificate 212, information management certificate 211, and data strength certificate 3101 along with the migration package regeneration request and then regenerates the migration package identified by the migration package ID (S3507c). Operations for regeneration are the same as in Figs. 11-13, and thus an explanation thereof is omitted.

When the operations in S3507 are complete, the migration authority 101 transmits a result of "OK", the migration package, and the data strength certificate 3101 to the second electronic terminal 3012 via the data transmission unit 506 (S3508a).

### (3) Operations to Determine Whether to Permit Migration

Next, explanation is provided for operations to determine whether to permit migration of private data in Embodiment 1.

Fig. 18 shows operational procedures of the migration permission determination unit 504 in the migration authority 101. These operational procedures are details on S3507b in Fig. 17.

In Embodiment 1, explanation is provided for an example in which the designated migration package ID is "001", the evaluation level of the conformance certificate 212 is EAL2, the SRK type of the information management certificate 211 is symmetric, the cipher type is AES, the key length is 128, and the evaluation level of the data strength certificate 3101 is EAL2.

The migration permission determination unit 504 extracts entry information indicated by the received migration package ID from the migration package management table 3301. As an example, the migration permission determination unit 504 extracts entry information indicated by the received migration package ID "001" from the migration package management table 3301 (S3601).

The migration permission determination unit 504 first compares evaluation levels to perform a determination. The authentication level determination table 801 is used in the determination. Specifically, the migration permission determination unit 504 compares the value of the evaluation level included in the entry information with the value of the evaluation level of the conformance certificate 212. If the value of the evaluation level included in the entry information is higher than the value of the evaluation level of the conformance certificate 212, control proceeds to S3603. If the value of the evaluation level included in the entry information is equal to or lower than the value of the evaluation level of the conformance certificate 212, control proceeds to S3604 (S3602).

Suppose, for example, that the evaluation level of the conformance certificate 212 is EAL2, and the value of the evaluation level designated by the migration package ID "001" is EAL4. According to the authentication level determination table 801, when the migration source authentication level is EAL4, the migration destination authentication level has to be EAL3 or higher for permission for migration to be granted. Therefore, permission is not granted, yielding a result of "NG".

When permission for migration in S3602 is not granted, yielding a result of "NG", the migration permission determination unit 504 compares the value of the evaluation level of the data strength certificate 3101 and the value of the evaluation level of the conformance certificate 212. If the value of the evaluation level of the data strength certificate 3101 is higher than the value of the evaluation level of the conformance certificate 212, permission for migration is not granted, and processing terminates. If the value of the evaluation level of the data strength certificate 3101 is equal to or lower than the value of the evaluation level of the conformance certificate 212, control proceeds to S3604 (S3603).

The result of determination is thus "OK" if the evaluation level of the conformance certificate 212 is equal to or higher than the evaluation level of the data strength certificate 3101. For example, when the evaluation level of the data strength certificate 3101 is EAL2, and the evaluation level of the conformance certificate 212 is EAL2, the result of determination is "OK".

The migration permission determination unit 504 compares encryption strengths to perform a determination. Specifically, the migration permission determination unit 504 compares the strength level of the entry information with the strength level indicated by the information management certificate. If the former is higher than the latter, migration is prohibited. If the strength level of the entry information is equal to or lower than the strength level indicated by the information management certificate, migration is permitted (S3604).

Suppose, for example, that the SRK type of the information management certificate 211 is symmetric, the cipher type is AES, and the key length is 128. As designated by the migration package ID "001", the SRK type is asymmetric, the cipher type is RSA, and the key length is 2048. Since the SRK type and the cipher type differ, the strength levels cannot be determined by comparing only the key lengths. Accordingly, the encryption strength table 701 is used to determine the strength level.

According to the encryption strength table 701, the strength level of the encryption designated by migration package ID "001" is strength level 2. On the other hand, according to the encryption strength table 701, the strength level of the encryption designated by the information management certificate 211 is strength level 3. Since the determination algorithm in the migration permission determination unit 504 permits migration if the strength level at the destination of migration is equal to or higher than the source of migration, the result of the determination is "OK".

### 1.6 Summary

Two cases are described above. In case 1, the first electronic terminal 3011 uploads private data to the migration authority 101. In case 2, the second electronic terminal 3012 downloads private data from the migration authority 101.

These cases can be adapted to the following sort of situation.

The first electronic terminal 3011 uploads private data to the migration authority 101 (case 1), and the second electronic terminal 3012 downloads the private data from the migration authority 101 and records the private data (case 2). Subsequently, the second electronic terminal 3012 uploads the private data to the migration authority 101 (case 1), and a third electronic terminal 3013 downloads the private data from the migration authority 101 (case 2).

In this situation, the migration authority 101 is a key migration device that manages migration of the collection of keys. The first electronic terminal 3011 is a key generation device, the second electronic terminal 3012 is a key recording device, and the third electronic terminal 3013 is an output destination device.

The migration authority 101 acquires a generation level, which is the security level of first electronic terminal 3011, i.e. the key generation device, and an output destination level, which is the security level of the third electronic terminal 3013, i.e. the output destination device. The generation level, i.e. the security level of the first electronic terminal 3011, is the value of the evaluation level of the data strength certificate indicated in S3603 of Fig. 18. On the other hand, the output destination level, i.e. the security level of the third electronic terminal 3013, is the value of the evaluation level of the conformance certificate 211 indicated in S3603 of Fig. 18.

Upon receiving a request to acquire the collection of keys recorded on the second electronic terminal 3012, i.e. the key recording device, from the third electronic terminal 3013, i.e. the output destination device, the migration authority 101 determines whether a relationship between the generation level and the output destination level fulfills a predetermined condition. This determination corresponds to step S3603 in Fig. 18.

When the relationship between the generation level and the output destination level fulfills the predetermined condition, i.e. when, upon comparison of the value of the evaluation level of the data strength certificate and the value of the evaluation level of the conformance certificate, the former is equal to or lower than the latter, migration is permitted, and the migration authority 101 outputs, from among the collection of keys, a key generated by the first electronic terminal 3011 to the third electronic terminal 3013 regardless of the security level of the second electronic terminal 3012.

On the other hand, when the relationship between the generation level and the output destination level does not fulfill the predetermined condition, i.e. when, upon comparison of the value of the evaluation level of the data strength certificate and the value of the evaluation level of the conformance certificate, the former is higher than the latter, migration is not permitted, and the migration authority 101 prohibits outputs, from among the collection of keys, of the key generated by the first electronic terminal 3011 to the third electronic terminal 3013 regardless of the security level of the second electronic terminal 3012.

### 2. Embodiment 2

Next, Embodiment 2 of the present invention is described with reference to the drawings.

### 2.1 Migration System 3

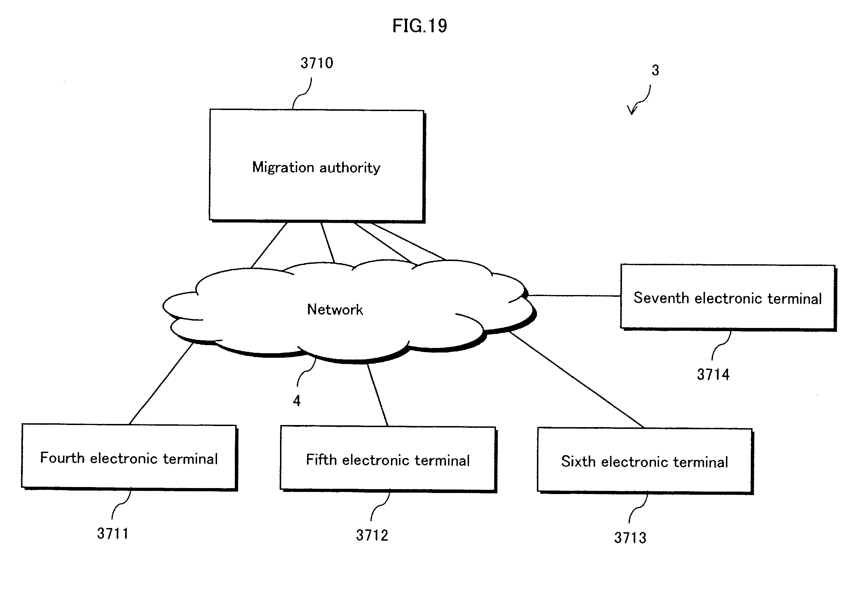

Fig. 19 shows the overall configuration of a migration system 3 in Embodiment 2 of the present invention.

As shown in Fig. 19, the migration system 3 is composed of a migration authority 3710, fourth electronic terminal 3711, fifth electronic terminal 3712, sixth electronic terminal 3713, and seventh electronic terminal 3714. The migration authority 3710, fourth electronic terminal 3711, fifth electronic terminal 3712, sixth electronic terminal 3713, and seventh electronic terminal 3714 are connected via a network 4.

The migration authority 3710 has almost the same structure as the migration authority 101 in Fig. 1, and therefore details on the migration authority 3710 are omitted.

The fourth electronic terminal 3711, fifth electronic terminal 3712, sixth electronic terminal 3713, and seventh electronic terminal 3714 also have the same basic structure as the first electronic terminal 3011 and the second electronic terminal 3012. Differences are described below.

### 2.2 Application Example of Migration System 3

The following describes application examples of the migration system 3.

### (1) Application Example 1

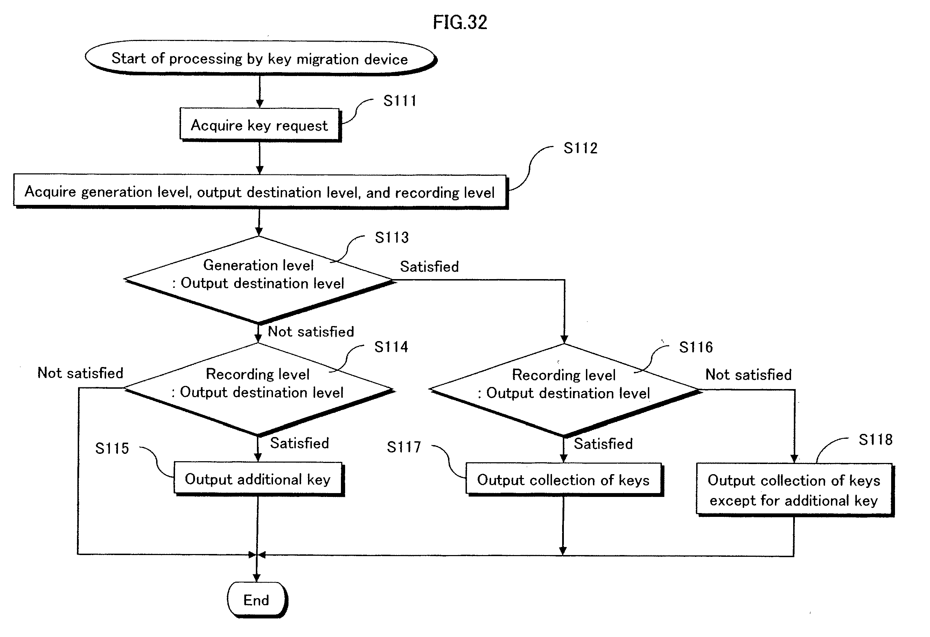

The following describes application example 1 with reference to Fig. 32.

The fourth electronic terminal 3711 is, for example, the device that generates private data. Private data is, for example, a collection of keys. The fourth electronic terminal 3711 is, for example, the key generation device that generates the collection of keys.

The fourth electronic terminal 3711 uploads the collection of keys to the migration authority 3710 via the network 4, and the fifth electronic terminal 3712 downloads the collection of keys from the migration authority 3710 via the network 4.

The fifth electronic terminal 3712 thus receives a collection of keys from the fourth electronic terminal 3711, i.e. a key generation device, and stores the collection of keys internally. The fifth electronic terminal 3712 is thus a key recording device that records a collection of keys generated by a key generation device. Furthermore, the fifth electronic terminal 3712 adds, to the collection of keys, an additional key that the fifth electronic terminal 3712 itself creates and records the collection of keys with the additional key added therein.

The sixth electronic terminal 3713 acquires the collection of keys from the fifth electronic terminal 3712 as follows. The sixth electronic terminal 3713 is an output destination device to which the collection of keys is ultimately output.

The fifth electronic terminal 3712 uploads the collection of keys to the migration authority 3710 via the network 4.

The migration authority 3710 is a key migration device that manages migration of the collection of keys. The migration authority 3710 includes: a receiving unit operable to receive, from the sixth electronic terminal 3713, a request to acquire a collection of keys recorded on the fifth electronic terminal 3712 (S111); an acquisition unit operable to acquire a generation level, an output destination level, and a recording level, the generation level being a security level of the fourth electronic terminal 3711, the output destination level being a security level of the sixth electronic terminal 3713, and the recording level being a security level of the fifth electronic terminal 3712 (S112); and a control unit operable, upon receiving from the sixth electronic terminal 3713 a request to acquire the collection of keys recorded on the fifth electronic terminal 3712, to determine whether a relationship between the generation level and the output destination level fulfills a predetermined condition (S113), and further determine whether a relationship between the recording level, i.e. the security level of the key recording device, and the output destination level fulfills a predetermined condition (S114, S116). When the relationship between the generation level and the output destination level fulfills the predetermined condition (S 113: Yes), but the relationship between the recording level and the output destination level does not fulfill the predetermined condition (S116: No), the control unit outputs, from among the collection of keys, keys except for the additional key to the sixth electronic terminal 3713 (S118). When the relationship between the generation level and the output destination level fulfills the predetermined condition (S113: Yes) and when the relationship between the recording level and the output destination level fulfills a predetermined condition (S116: yes), the control unit outputs the collection of keys to the sixth electronic terminal 3713 (S117). Even when the relationship between the generation level and the output destination level does not fulfill the predetermined condition (S113: No), when the relationship between the recording level and the output destination level fulfills the predetermined condition (S114: Yes), the control unit outputs the additional key to the output destination device (S115). When the relationship between the generation level and the output destination level does not fulfill the predetermined condition (S113: No), and the relationship between the recording level and the output destination level does not fulfill the predetermined condition (S114: No), the control unit prohibits output of the collection of keys.

As one example, the predetermined condition may be fulfilled when the output destination level is higher than or equal to a base security level (in this case, the generation level or the recording level) and not fulfilled when the output destination level is lower than the base security level.

The sixth electronic terminal 3713 downloads the collection of keys from the migration authority 3710 via the network 4 in accordance with the condition and stores the collection of keys.

As described above, the fifth electronic terminal 3712, which is a key recording device, acquires the collection of keys generated by the fourth electronic terminal 3711, which is a key generation device, via the migration authority 3710, adds, to the acquired collection of keys, an additional key that the fifth electronic terminal 3712 itself creates, and records the collection of keys with the additional key added therein. The sixth electronic terminal 3713, which is an output destination device, acquires the collection of keys from the fifth electronic terminal 3712 via the migration authority 3710 in accordance with the above conditions.

### (2) Application Example 2

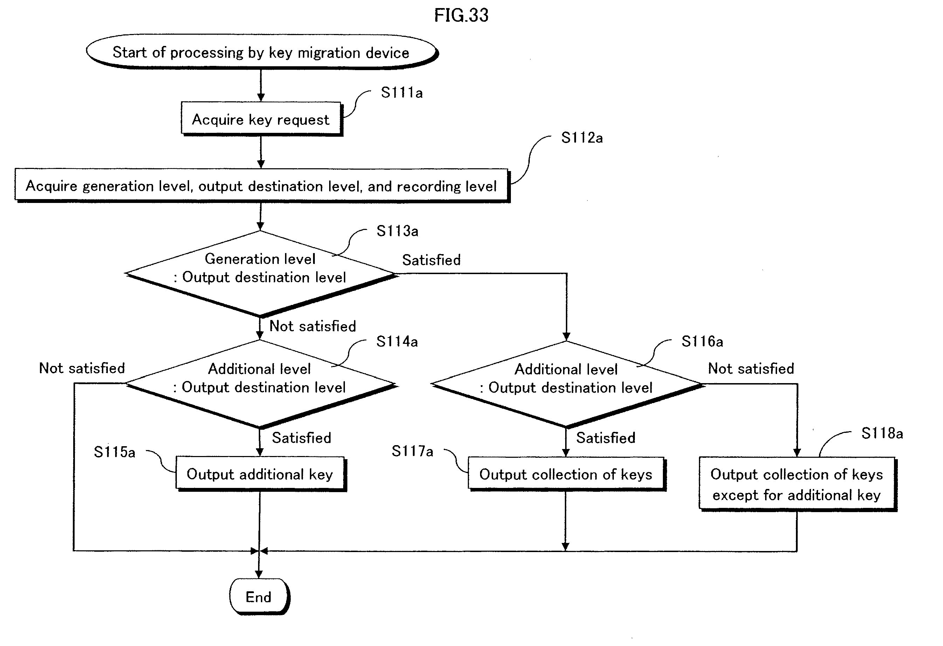

The following describes application example 2 with reference to Fig. 33.

The fourth electronic terminal 3711 is, for example, the device that generates private data. Private data is, for example, a collection of keys. The fourth electronic terminal 3711 is, for example, the key generation device that generates the collection of keys.

The fourth electronic terminal 3711 uploads the collection of keys to the migration authority 3710 via the network 4, and the seventh electronic terminal 3714 downloads the collection of keys from the migration authority 3710 via the network 4.

The seventh electronic terminal 3714 thus acquires the collection of keys from the fourth electronic terminal 3711, which is a key generation device. The seventh electronic terminal 3714 itself then generates an additional key and adds the generated additional key to the collection of keys. The seventh electronic terminal 3714 is thus a key adding device that adds an additional key to the collection of keys.

The seventh electronic terminal 3714 uploads the collection of keys to the migration authority 3710 via the network. The fifth electronic terminal 3712 downloads the collection of keys from the migration authority 3710 via the network and records the received collection of keys internally. The fifth electronic terminal 3712 is thus a key recording device that records a collection of keys. The collection of keys recorded by the fifth electronic terminal 3712 includes the additional key added by the seventh electronic terminal 3714.

The sixth electronic terminal 3713 acquires the collection of keys from the fifth electronic terminal 3712 as follows. The sixth electronic terminal 3713 is an output destination device to which the collection of keys is ultimately output.

The fifth electronic terminal 3712 uploads the collection of keys to the migration authority 3710 via the network 4.

The migration authority 3710 is a key migration device that manages migration of the collection of keys. The migration authority 3710 includes: a receiving unit operable to receive, from the sixth electronic terminal 3713, a request to acquire a collection of keys recorded on the fifth electronic terminal 3712 (S111a); an acquisition unit operable to acquire a generation level, an output destination level, and a recording level, the generation level being a security level of the fourth electronic terminal 3711, the output destination level being a security level of the sixth electronic terminal 3713, and the recording level being a security level of the fifth electronic terminal 3712 (S112a); and a control unit operable, upon receiving from the sixth electronic terminal 3713 a request to acquire the collection of keys recorded on the fifth electronic terminal 3712, to determine whether a relationship between the generation level and the output destination level fulfills a predetermined condition (S113a), and further determine whether a relationship between the output destination level and an additional level, i.e. the security level of the key adding device, fulfills a predetermined condition (S114a, S116a). When the relationship between the generation level and the output destination level fulfills the predetermined condition (S113a: Yes), but the relationship between the additional level and the output destination level does not fulfill the predetermined condition (S116a: No), the control unit outputs, from among the collection of keys, keys except for the additional key to the sixth electronic terminal 3713 (S118a). When the relationship between the generation level and the output destination level fulfills the predetermined condition (S113a: Yes) and when the relationship between the additional level and the output destination level fulfills a predetermined condition (S116a: yes), the control unit outputs the collection of keys to the sixth electronic terminal 3713 (S117a). Even when the relationship between the generation level and the output destination level does not fulfill the predetermined condition (S113a: No), when the relationship between the additional level and the output destination level fulfills the predetermined condition (S114a: Yes), the control unit outputs the additional key to the output destination device (S115a). When the relationship between the generation level and the output destination level does not fulfill the predetermined condition (S113a: No), and the relationship between the additional level and the output destination level does not fulfill the predetermined condition (S114a: No), the control unit prohibits output of the collection of keys.

As one example, the predetermined condition may be fulfilled when the output destination level is higher than or equal to a base security level (in this case, the generation level or the additional level) and not fulfilled when the output destination level is lower than the base security level.

The sixth electronic terminal 3713 downloads the collection of keys from the migration authority 3710 via the network 4 in accordance with the condition and stores the collection of keys.

As described above, the seventh electronic terminal 3714, which is a key adding device, acquires the collection of keys generated by the fourth electronic terminal 3711, which is a key generation device, via the migration authority 3710 and adds, to the acquired collection of keys, an additional key that the seventh electronic terminal 3714 itself creates. The fifth electronic terminal 3712 is a key recording device that acquires a collection of keys and records the acquired collection of keys. The sixth electronic terminal 3713, which is an output destination device, acquires the collection of keys from the fifth electronic terminal 3712 via the migration authority 3710 in accordance with the above conditions.

### 2.3 Fourth Electronic Terminal 3711

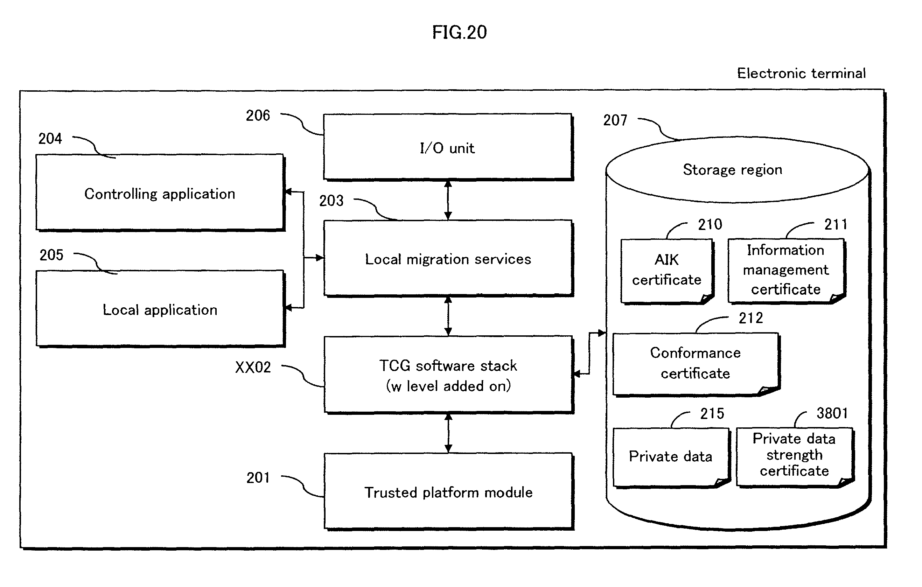

Fig. 20 shows the configuration of the fourth electronic terminal 3711. Unlike the first electronic terminal 3011 and second electronic terminal 3012, private data strength attributes 3801 are recorded in the storage region 207 instead of the data strength certificate 3101. Also, the fourth electronic terminal 3711 is provided with TCG Software Stack XX02 instead of TCG Software Stack 202. With respect to all of the data in the private data 215, the private data strength attributes 3801 record terminal authentication level information for when the data has been added, as well as data identifying the specifications of security assessment standards used to determine the authentication level.

Note that the fifth electronic terminal 3712, sixth electronic terminal 3713, and seventh electronic terminal 3714 have the same configuration as the fourth electronic terminal 3711, and therefore a description thereof is omitted.

### (Example of Private Data and Private Data Strength Attributes)

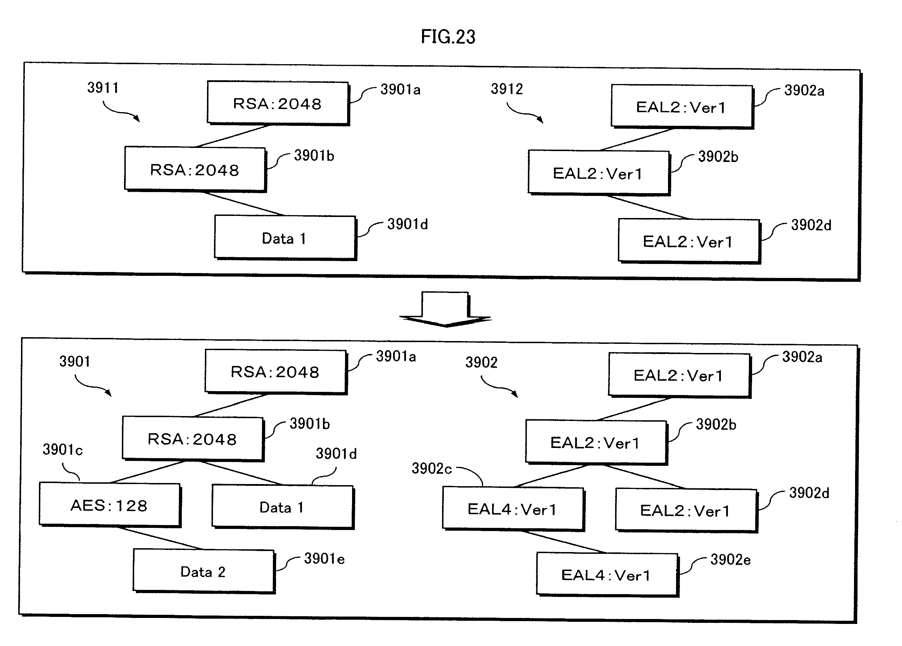

Fig. 23 shows, as an example of private data 215 and private data strength attributes 3801 stored in the storage region 207, private data 3911 and private data strength attributes 3912 stored in the storage region 207 of the fourth electronic terminal 3711.

In Fig. 23, pieces of data 3902a, 3902b, and 3902d, which compose the private data strength attributes 3912, are respectively added to pieces of data 3901a, 3901b, and 3901d, which compose the private data 3911. The pieces of data 3902a, 3902b, and 3902d each identify the terminal authentication level information and the specifications of security assessment standards used in determining the authentication level.

As shown in Fig. 23, the private data 3911 indicates that (data 1) 3901d is encrypted via RSA with a key 3901 b that is 2048 bits long, and the key 3901 b is encrypted via RSA with a key 3901 a that is 2048 bits long.

Also, levels 3902a, 3902b, and 3902d respectively correspond to the key 3901a, key 3901b, and (data 1) 3901d. Levels 3902a, 3902b, and 3902d are each EAL2.

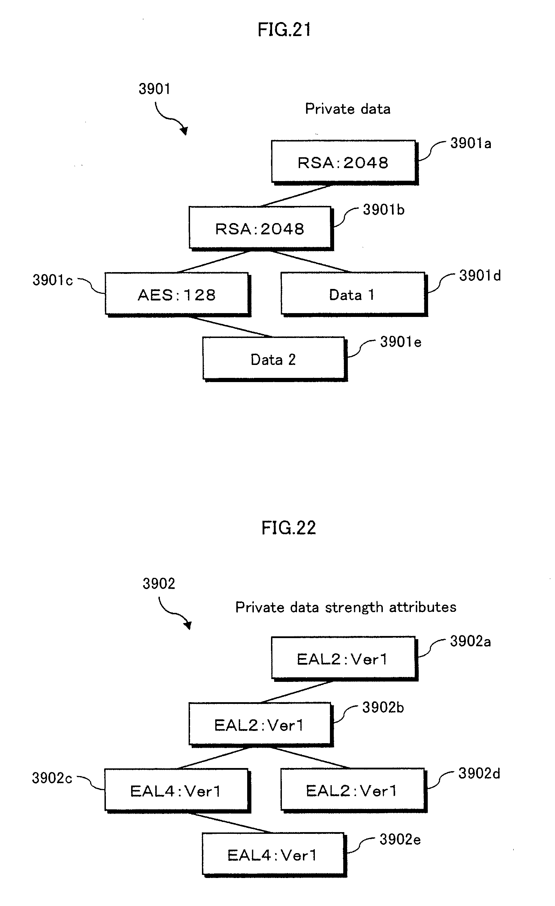

Next, Figs. 21 and 22 show, as an example of private data 215 and private data strength attributes 3801 stored in the storage region 207, private data 3901 and private data strength attributes 3902 stored in the storage region 207 of the fifth electronic terminal 3712.

The levels 3902a, 3902b, 3902c, 3902d, and 3902e which compose the private data strength attributes 3902 shown in Fig. 22 are respectively added to pieces of data 3901a, 3901b, 3901c, 3901d, and 3901e, which compose the private data 3901 shown in Fig. 21. The levels 3902a, 3902b, 3902c, 3902d, and 3902e are data to identify the terminal authentication level information and the specifications of security assessment standards used in determining the authentication level.

As shown in Fig. 21, the private data 3901 indicates that (data 2) 3901e is encrypted via AES with a key 3901c that is 128 bits long, the key 3901c is encrypted via RSA with a key 3901b that is 2048 bits long, (data 1) 3901d is encrypted via RSA with the key 3901b that is 2048 bits long, and the key 3901b is encrypted via RSA with a key 3901a that is 2048 bits long.

Also, levels 3902a, 3902b, 3902c, 3902d, and 3902e respectively correspond to the key 3901a, key 3901b, key 3901 c, (data 1) 3901d, and (data 2) 3901e. Levels 3902a, 3902b, 3902c, 3902d, and 3902e are respectively EAL2, EAL2, EAL4, EAL2, and EAL4.

As shown in Figs. 21, 22, and 23, the private data 3901 is formed by adding the key 3901c and the (data 2) 3901 e to the private data 3911.

In other words, the fourth electronic terminal 3711 stores the private data 3911 and the private data strength attributes 3912 and uploads the private data 3911 and the private data strength attributes 3912 to the migration authority 3710. The fifth electronic terminal 3712 downloads the private data 3911 and the private data strength attributes 3912 from the migration authority 3710, then, as shown in Fig. 23, adds the 3901c and the (data 2) 3901e to the private data 3911, adds the levels 3902c and 3902e to the private data strength attributes 3912, generates the private data 3901 and private data strength attributes 3902, and stores the generated private data 3901 and private data strength attributes 3902.

### (Operational Procedures to Add Data)

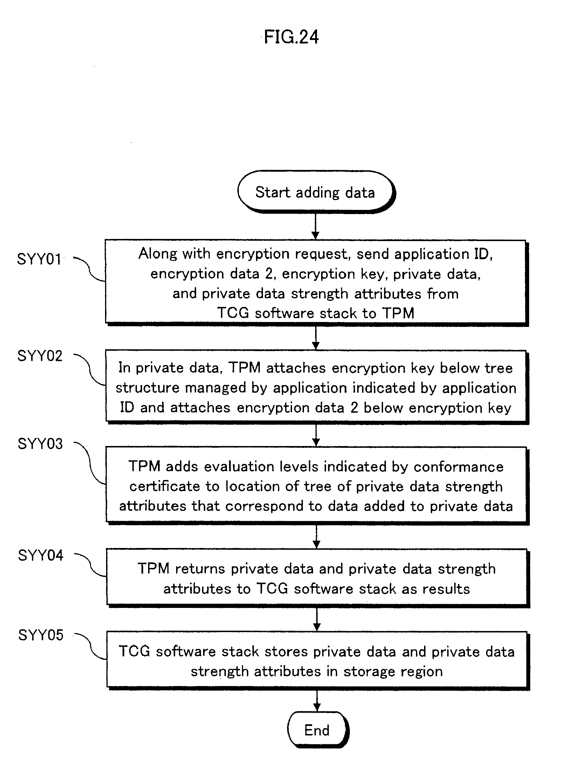

Procedures to add data in the electronic terminal are described with reference to the flowchart shown in Fig. 24.

The TCG Software Stack XX02 outputs, along with an encryption request, an application ID, piece of encryption data 2, encryption key, private data, and private data strength attributes to the Trusted Platform Module 201 (step SYY01).

Next, in the private data, the Trusted Platform Module 201 attaches, below the tree structure managed by the application indicated by the application ID (for example, below 3901 b shown in Fig. 23), the encryption key (for example, 3901c shown in Fig. 23) and attaches, below the encryption key (for example, 3901c), the piece of encryption data 2 (for example, 3901e shown in Fig. 23) (step SYY02).

The Trusted Platform Module 201 then adds evaluation levels indicated by the conformance certificate to a location of the tree (for example, below 3902b and 3902c in Fig. 23) of the private data strength attributes that correspond to the data added to the private data (for example, 3901 and 3901e shown in Fig. 23) (step SYY03).

Next, the Trusted Platform Module 201 outputs, to the TCG Software Stack XX02, the private data to which data was added (for example, 3901 in Fig. 23) and the private data strength attributes to which levels were added (for example, 3902 in Fig. 23) (step SYY04).

The TCG Software Stack XX02 then stores the private data to which data was added (for example, 3901 in Fig. 23) and the private data strength attributes to which levels were added (for example, 3902 in Fig. 23) in the storage region 207 (step SYY05).

### 2.4 Migration Authority 3710

The following describes the migration authority 3710, focusing on differences with the migration authority 101.

### (Migration Package Management Table 4001)

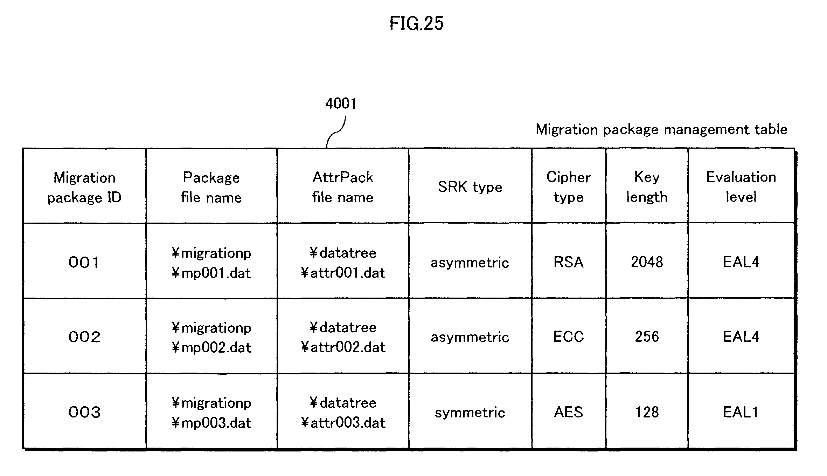

The migration authority 3710 stores the migration package management table 4001 shown in Fig. 25 instead of the migration package management table 3301 stored by the migration authority 101.

The migration package management table 4001 and the migration package management table 3301 differ in that an entry for an AttrPack file name is added to the migration package management table 4001. The AttrPack file name indicates the storage location of the attribute package generated from the private data strength attributes 3801 when generating the migration package. Other parameters are the same as the migration package management table 3301, and therefore a description thereof is omitted.

### (Operational Procedures when Uploading Private Data)

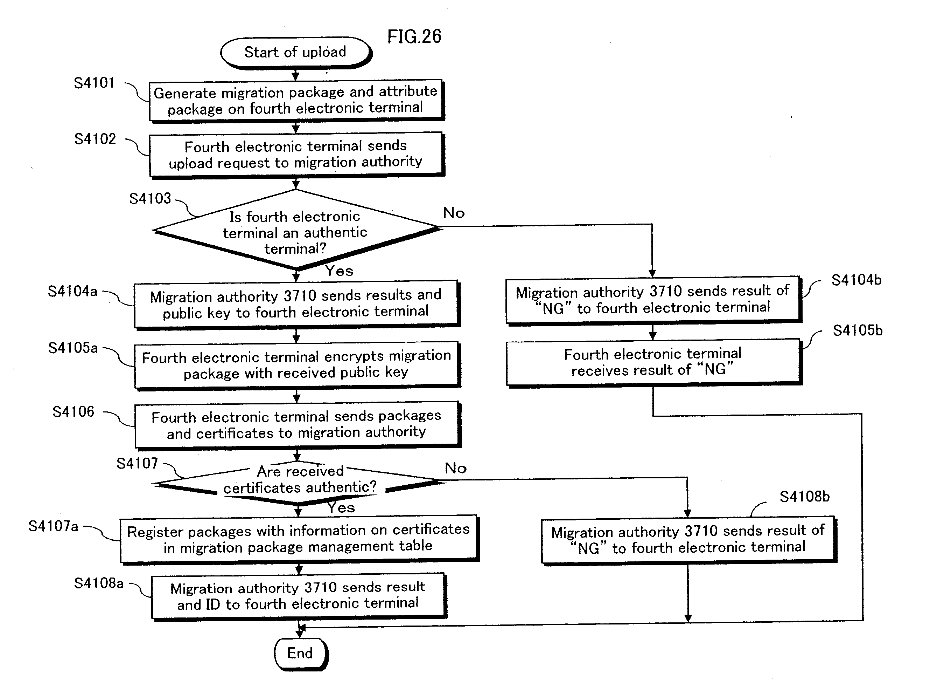

Fig. 26 shows operational procedures when the fourth electronic terminal 3711 uploads private data to the migration authority 3710. The following describes these operational procedures.

The fourth electronic terminal 3711 prepares to upload private data, as shown below. Specifically, the fourth electronic terminal 3711 aggregates a single piece or a plurality of pieces of private data for uploading, thus generating a collection of data called a migration package. Details on the migration package are recited in Non-Patent Literature 1 and thus are omitted from this explanation. At this time, the fourth electronic terminal 3711 also generates an attribute package from the private data strength attributes 3801. Other operations are the same as S3401, and therefore a description thereof is omitted (S4101).

Next, the fourth electronic terminal 3711 transmits an upload request to the migration authority 3710. Note that details on this step are the same as S3402 and thus are omitted (S4102).

Next, it is determined whether the fourth electronic terminal 3711 is an authentic terminal. Note that details on this step are the same as S3403 and thus are omitted (S4103).

When the fourth electronic terminal 3711 is determined to be authentic (S4103: Yes), the migration authority 3710 transmits the result of determination and the public key of the migration authority 3710 to the fourth electronic terminal 3711. Note that details on this step are the same as S3404a and thus are omitted (S4104a).

Next, the fourth electronic terminal 3711 encrypts the migration package using the received public key. Note that details on this step S101 1 are the same as S3405a and thus are omitted (S4105a).

The fourth electronic terminal 3711 transmits the migration package encrypted in S4105a, conformance certificate 212, information management certificate 211, and attribute package to the migration authority 3710. Note that the migration package, conformance certificate 212, and information management certificate 211 may be handled as separate pieces of data, or the certificates may all be included in the migration package. The attribute package may also be protected by being encrypted. The migration authority 3710 receives the migration package, conformance certificate 212, information management certificate 211, and attribute package. Upon receipt of these pieces of data, the data receiving unit 500 transmits these pieces of data to the certificate analysis unit 502 (S4106).

The certificate analysis unit 502 verifies the authorization of these certificates (S4107) and, in accordance with the verification results, operates as follows.

i) When the authorization of each certificate is confirmed (S4107: Yes), the certificate analysis unit 502 transmits the certificates to the migration package registration unit 503. Upon receiving the migration package, conformance certificate 212, information management certificate 211, and attribute package from the certificate analysis unit 502, the migration package registration unit 503 generates a migration package ID that uniquely identifies the migration package in the migration authority 3710 and stores the migration package in the storage region 507. The migration package registration unit 503 also extracts data from the storage location and from each certificate and registers the extracted data in the migration package management table 4001 (S4107a). When registration in S4107a is complete, the migration authority 3710 transmits a result of "OK", as well as the migration package ID, to the fourth electronic terminal 3711 via the data transmission unit 506 (S4108a). Upload processing is thus complete.

ii) When any of the certificates is discovered not to be authentic (S4107: No), the certificate analysis unit 502 returns a result of "NG" via the data transmission unit 506 (S4108b) and terminates upload processing.

When the fourth electronic terminal 3711 is determined not to be an authentic terminal (S4103: No), the migration authority 3710 transmits a result of "NG" to the fourth electronic terminal 3711 (step S4104b), the fourth electronic terminal 3711 receives the result of "NG" (step S4105b), and processing terminates.

### (Operational Procedures When Downloading Private Data)

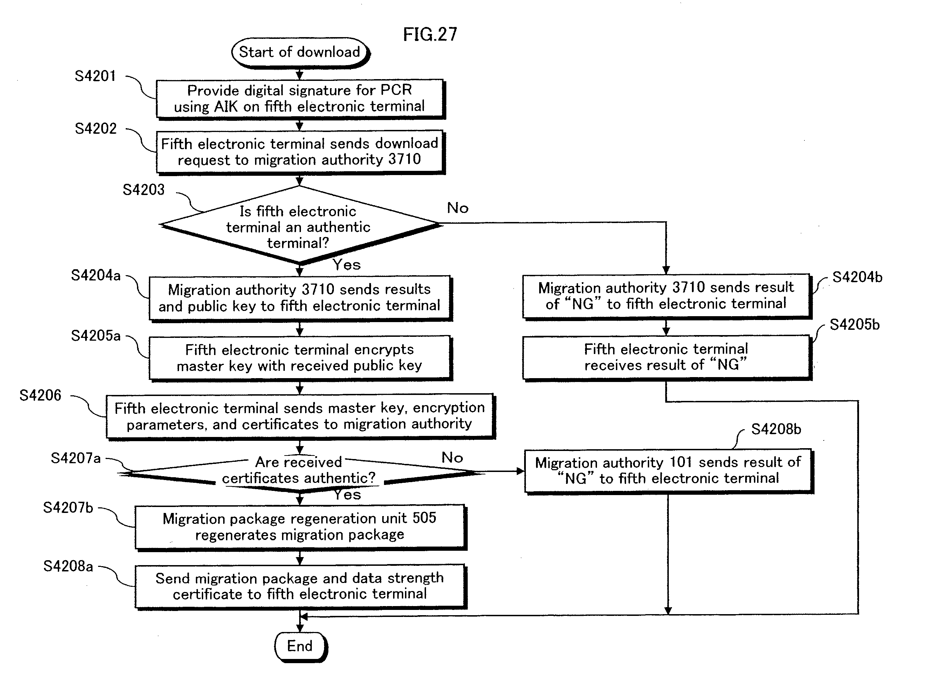

Fig. 27 shows operational procedures when the fifth electronic terminal 3712 downloads private data from the migration authority 3710. The following describes these operational procedures.

The fifth electronic terminal 3712 provides the PCR with a digital signature using AIK. Note that details on this step are the same as S3501, and thus an explanation thereof is omitted (S4201).

Next, the fifth electronic terminal 3712 transmits a download request to the migration authority 3710. Note that details on this step are the same as S3502, and thus an explanation thereof is omitted (S4202).

Next, it is determined whether the fifth electronic terminal 3712 is an authentic terminal. Note that details on this step are the same as S3503, and thus an explanation thereof is omitted (S4203).

When the fifth electronic terminal 3712 is determined to be authentic (S4203: Yes), the migration authority 3710 transmits the result of determination and the public key of the migration authority 3710 to the fifth electronic terminal 3712. Note that details on this step are the same as S3504a, and thus an explanation thereof is omitted (S4204a).

Next, the fifth electronic terminal 3712 encrypts the master key using the received public key. Note that details on this step are the same as S3505a, and thus an explanation thereof is omitted (S4205a).

Next, the fifth electronic terminal 3712 transmits the master key, encryption parameters, and certificates to the migration authority 3710. Note that details on this step are the same as S3506, and thus an explanation thereof is omitted (S4206).

The certificate analysis unit 502 verifies the authorization of these certificates (S4207a) and, in accordance with the verification results, operates as follows.

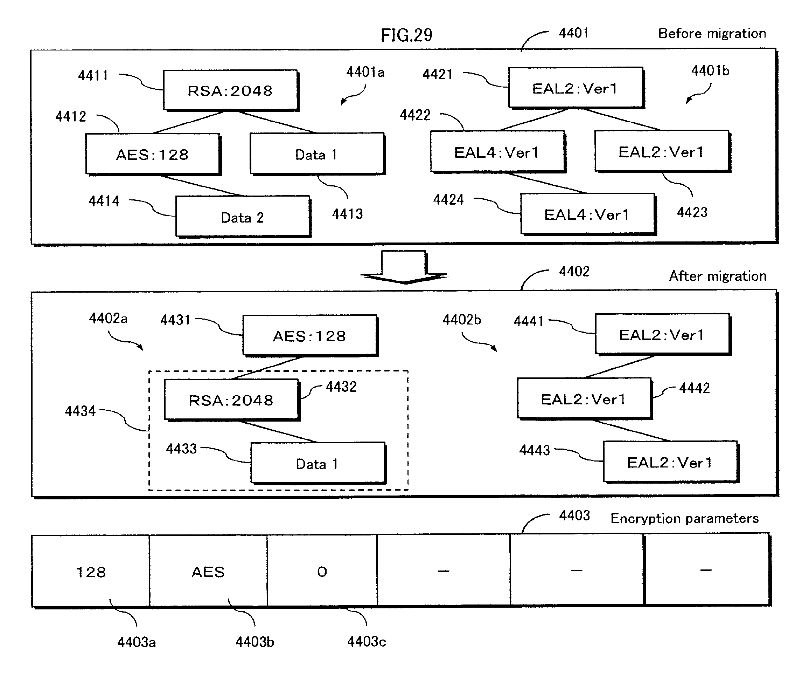

i) When the authorization of each certificate is confirmed (S4207a: Yes), the certificate analysis unit 502 transmits the migration package ID, encrypted master key, encryption parameters, conformance certificate 212, information management certificate 211, and migration package regeneration request to the migration package regeneration unit 505. The migration package regeneration unit 505 receives the migration package ID, encrypted master key, encryption parameters, conformance certificate 212, and information management certificate 211 along with the migration package regeneration request and then regenerates the migration package identified by the migration package ID. Operations for regeneration are described below with reference to Fig. 29 (S4207b). The migration authority 3710 transmits a result of "OK", the migration package, and the data strength certificate 3101 to the fifth electronic terminal 3712 (S4208a). Download processing is thus complete.

ii) When any of the certificates is discovered not to be authentic (S4207a: No), the certificate analysis unit 502 returns a result of "NG" to the fifth electronic terminal 3712 via the data transmission unit 506 (S4208b) and terminates download processing.

When the fifth electronic terminal 3712 is determined not to be an authentic terminal (S4203: No), the migration authority 3710 transmits a result of "NG" to the fifth electronic terminal 3712 (step S4204b). The fifth electronic terminal 3712 receives the result of "NG" (step S4205b). Download processing is thus complete.

### (Operational Procedures to Regenerate a Migration Package)

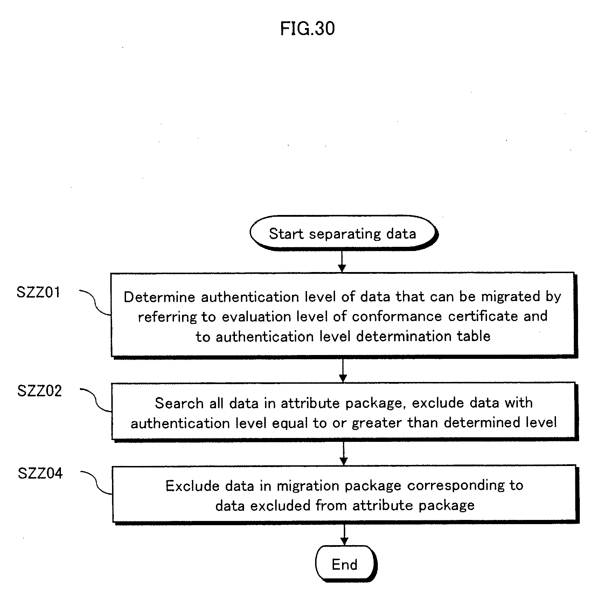

Operational procedures by which the migration permission determination unit 504 and migration package regeneration unit 505 in the migration authority 3710 regenerate a migration package are described with reference to the flowchart shown in Fig. 30. Note that these operational procedures are details on S4207b in Fig. 27.

The migration permission determination unit 504 and the migration package regeneration unit 505 determine the authentication level of data that can be migrated by referring to the evaluation level of the conformance certificate and to the authentication level determination table (SZZ01).

Next, the migration package regeneration unit 505 searches through all of the data in the attribute package and excludes data with an authentication level equal to or higher than the determined level (SZZ02).

Next, the migration package regeneration unit 505 excludes the data in the migration package corresponding to the data excluded from the attribute package (SZZ04).

### (Details on Operational Procedures for Determining Permission)

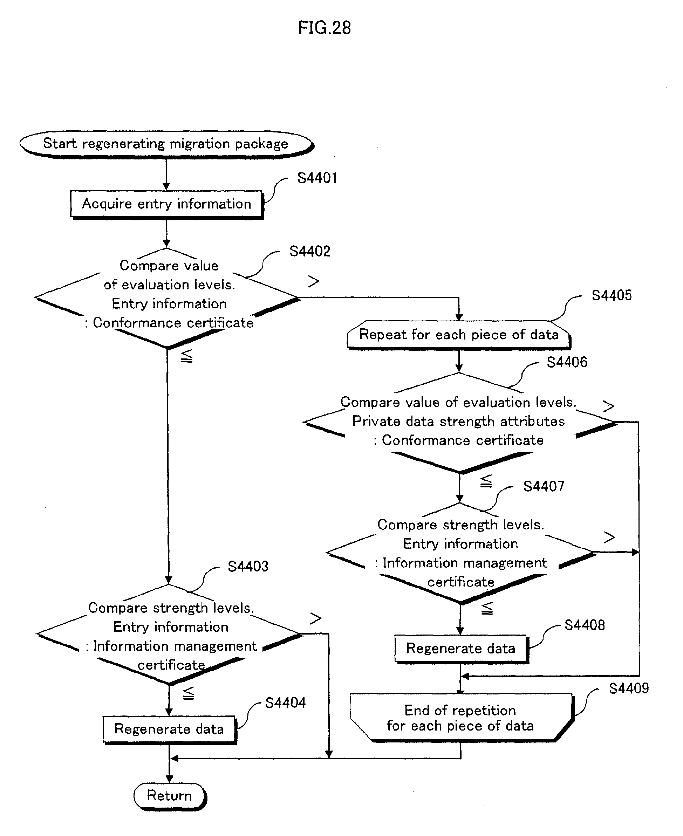

Among the operational procedures to regenerate the migration package, the following describes details on the operations to determine permission for migration with reference to the flowchart in Fig. 28. For each piece of data composing the migration package, permission for migration is determined. Only data for which migration is permitted is regenerated and output.

The migration permission determination unit 504 extracts entry information indicated by the received migration package ID from the migration package management table 4001 (S4401).

Next, the migration permission determination unit 504 compares evaluation levels to perform a determination. The authentication level determination table 801 is used in the determination. Specifically, the migration permission determination unit 504 compares the value of the evaluation level included in the entry information with the value of the evaluation level of the conformance certificate 212 (S4402). If the value of the evaluation level included in the entry information is higher than the value of the evaluation level of the conformance certificate 212 (S4402: >), control proceeds to S4405.

If the value of the evaluation level included in the entry information is equal to or lower than the value of the evaluation level of the conformance certificate 212 (S4402: ≤), the migration permission determination unit 504 compares encryption strengths to make a determination. Specifically, the migration permission determination unit 504 compares the strength level of the entry information and the strength level indicated by the information management certificate (S4403). If the strength level of the entry information is higher than the strength level indicated by the information management certificate (S4403: >), permission to migrate the data is not granted, and processing terminates. If the value of the strength level of the entry information is equal to or lower than the strength level indicated by the information management certificate (S4403: ≤), permission to migrate the data is granted. The migration package regeneration unit 505 regenerates the migration package (step S4404), and processing terminates.

The migration permission determination unit 504 repeats steps S4406-S4408 for each piece of data in the migration package (steps S4405-S4409).

For each piece of data, the migration permission determination unit 504 acquires, from the migration package management table 4001, the value of the evaluation level of private data strength attributes indicated by the AttrPack file name corresponding to the received migration package ID. The migration permission determination unit 504 compares the value of the evaluation level of private data strength attributes with the value of the evaluation level of the conformance certificate 212 (S4406). If the value of the evaluation level of the private data strength attributes is higher than the value of the evaluation level of the conformance certificate 212 (S4406: >), permission to migrate the data is not granted, and processing of the data terminates.

If the value of the evaluation level of the private data strength attributes is equal to or lower than the value of the evaluation level of the conformance certificate 212 (S4406: ≤), the migration permission determination unit 504 compares encryption strengths to make a determination. Specifically, the migration permission determination unit 504 compares the strength level of the entry information of each piece of data and the strength level indicated by the information management certificate (S4407).

If the strength level of the entry information of a piece of data is higher than the strength level indicated by the information management certificate (S4407: >), permission to migrate the data is not granted, and processing of the data terminates.

If the value of the strength level of the entry information is equal to or lower than the strength level indicated by the information management certificate (S4407: ≤), permission to migrate the data is granted. The migration package regeneration unit 505 regenerates the data (step S4408), and processing of the data terminates.

### (Details on Operational Procedures for Determining Permission in Modification)

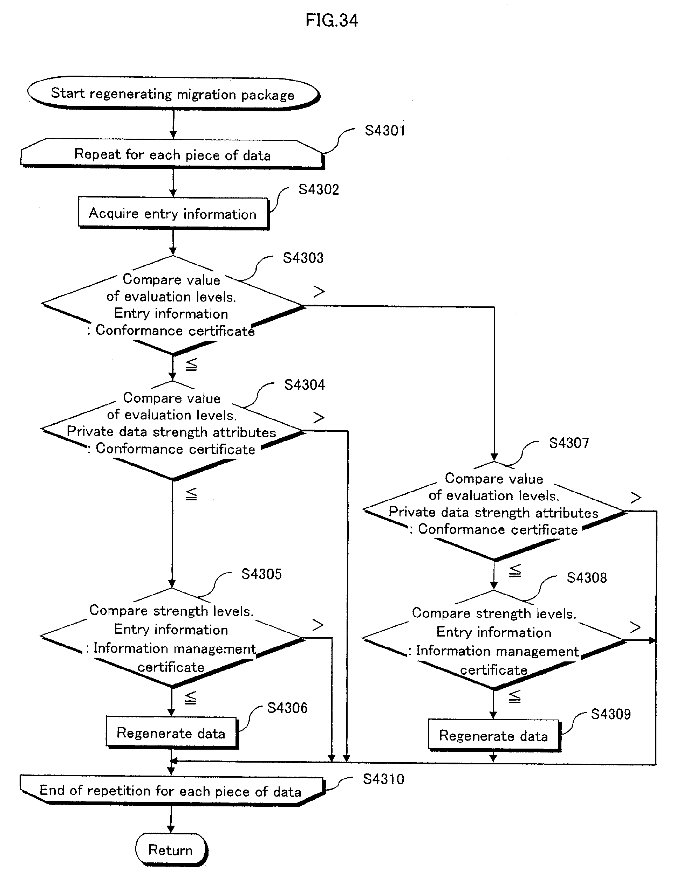

Among the operational procedures to regenerate the migration package, the following describes details on the operations to determine permission for migration in a Modification with reference to the flowchart in Fig. 34.

For each piece of data composing the migration package, permission for migration is determined. Only data for which migration is permitted is regenerated and output.

The migration permission determination unit 504 repeats steps S4302-S4309 for each piece of data in the migration package (steps S4301-S4310).

The migration permission determination unit 504 extracts entry information indicated by the received migration package ID from the migration package management table 4001 for each piece of data in the migration package (S4302).

The migration permission determination unit 504 compares evaluation levels to perform a determination. The authentication level determination table 801 is used in the determination. Specifically, the migration permission determination unit 504 compares the value of the evaluation level included in the entry information of each piece of data with the value of the evaluation level of the conformance certificate 212 (S4303). If the value of the evaluation level included in the entry information of each piece of data is higher than the value of the evaluation level of the conformance certificate 212 (S4303), control proceeds to S4307. If the value of the evaluation level included in the entry information of each piece of data is equal to or lower than the value of the evaluation level of the conformance certificate 212 (S4303), control proceeds to S4304.

Next, for each piece of data, the migration permission determination unit 504 acquires, from the migration package management table 4001, the value of the evaluation level of private data strength attributes indicated by the AttrPack file name corresponding to the received migration package ID. The migration permission determination unit 504 compares the value of the evaluation level of private data strength attributes with the value of the evaluation level of the conformance certificate 212 (S4304). If the value of the evaluation level of the private data strength attributes is higher than the value of the evaluation level of the conformance certificate 212 (S4304), permission to migrate the data is not granted, and processing of the data terminates. If the value of the evaluation level of the private data strength attributes is equal to or lower than the value of the evaluation level of the conformance certificate 212 (S4304), control proceeds to S4305.

Next, the migration permission determination unit 504 compares encryption strengths to perform a determination. Specifically, the migration permission determination unit 504 compares the strength level of the entry information of each piece of data and the strength level indicated by the information management certificate (S4305). If the strength level of the entry information of a piece of data is higher than the strength level indicated by the information management certificate (S4305), permission to migrate the data is not granted, and processing of the data terminates. If the value of the strength level of the entry information is equal to or lower than the strength level indicated by the information management certificate (S4305), permission to migrate the data is granted. The migration package regeneration unit 505 regenerates the data (step S4306), and processing of the data terminates.

The migration permission determination unit 504 also compares the value of the evaluation level of the private data strength attributes corresponding to the data with the evaluation level of the conformance certificate 212 (S4307). If the value of the evaluation level of the private data strength attributes is higher than the value of the evaluation level of the conformance certificate 212 (S4307), permission to migrate the data is not granted, and processing of the data terminates. If the value of the evaluation level of the private data strength attributes is equal to or lower than the value of the evaluation level of the conformance certificate 212 (S4307), control proceeds to S4308.

Next, the migration permission determination unit 504 compares encryption strengths to perform a determination. Specifically, the migration permission determination unit 504 compares the strength level of the entry information of each piece of data and the strength level indicated by the information management certificate (S4308). If the strength level of the entry information of a piece of data is higher than the strength level indicated by the information management certificate (S4308), permission to migrate the data is not granted, and processing of the data terminates. If the value of the strength level of the entry information is equal to or lower than the strength level indicated by the information management certificate (S4308), permission to migrate the data is granted. The migration package regeneration unit 505 regenerates the data (step S4309), and processing of the data terminates.

In the Modification in the flowchart in Fig. 34, the migration authority 3710 is a key migration device that controls migration of keys from a key recording device, which has recorded thereon a collection of keys including a key generated by a key generation device, to an output destination device. The migration authority 3710 includes: a receiving unit operable to receive, from the output destination device, a request to acquire a key recorded on the key recording device; an acquisition unit operable to acquire a generation level and an output destination level, the generation level being a security level of the key generation device, and the output destination level being a security level of the output destination device; a determination unit operable to determine whether a relationship between the generation level (which corresponds to the evaluation level in the entry information in step S4303) and the output destination level (which corresponds to the evaluation level in the conformance certificate in step S4303) fulfills a predetermined condition (step S4303); and a control unit operable, (i) when the relationship between the generation level and the output destination level fulfills the predetermined condition, to output, from among the collection of keys, a key generated by the key generation device to the output destination device regardless of a security level of the key recording device, and (ii) when the relationship between the generation level and the output destination level does not fulfill the predetermined condition, to prohibit output, from among the collection of keys, of the key generated by the key generation device to the output destination device regardless of the security level of the key recording device.

The acquisition unit furthermore acquires a recording level, which is a security level of the key recording device. The determination unit furthermore determines whether a relationship between the recording level (which corresponds to the evaluation level in the private data strength attributes in step S4304 or step S4307) and the output destination level (which corresponds to the evaluation level in the conformance certificate in step S4304 or step S4307) fulfills a predetermined condition (step S4304 or step S4307). When the predetermined condition is not fulfilled, the determination unit determines whether a relationship between the generation level (which corresponds to the strength level in the entry information in step S4305 or step S4308) and the output destination level (which corresponds to strength level in the information management certificate in step S4305 or step S4308) fulfills a second predetermined condition (step S4305 or step S4308); and when the relationship between the generation level and the output destination level fulfills the second predetermined condition (step S4305 or step S4308: ≤), the control unit furthermore outputs a key generated by the key generation device.

### (Example of a Migration Package Before and After Migration)

Fig. 29 shows data 4401 before migration, which indicates a migration package 4401a and the status of a corresponding attribute package 4401b before migration, as well as data 4402 after migration, which indicates a migration package 4402a and the status of a corresponding attribute package 4402b after migration.

The migration package 4401a before migration indicates that (data 2) 4414 is encrypted via AES with a key 4412 that is 128 bits long, the key 4412 is encrypted via RSA with a key 4411 that is 2048 bits long, and (data 1) 4413 is encrypted via RSA with the key 4411 that is 2048 bits long. Levels 4421, 4422, 4423, and 4424 respectively correspond to the keys 4411, 4412, (data 1) 4413, and (data 2) 4414. Levels 4421, 4422, 4423, and 4424 are respectively EAL2, EAL4, EAL2, and EAL4.

The migration package 4402a after migration indicates that (data 1) 4433 is encrypted via RSA with a key 4432 that is 2048 bits long, and the key 4432 is encrypted via AES with a key 4431 that is 128 bits long. Levels 4441, 4442, and 4443 respectively correspond to the keys 4431, 4432, and (data 1) 4433. Levels 4441, 4442, and 4443 are all EAL2.

When regenerating the migration package, the authentication level determination table 801 is used in determining regeneration of each piece of data.

This example assumes that encryption parameters 4403 are designated, and the evaluation level of the conformance certificate 212 received in S4207b is EAL2.

Since the evaluation level of the conformance certificate 212 is EAL2, data with a level of EAL4 is excluded from a newly regenerated migration package in accordance with the authentication level determination table 801.

Furthermore, since the (C) changing method 4403c in the encryption parameters 4403 designates parameter 0, the migration package regeneration unit 505 only performs encryption with the master key.

Since the data 4411 in the uppermost level when the migration package is expanded indicates a pair of a 2048-bit public key and private key in an RSA encryption algorithm, the migration package regeneration unit 505 decrypts this pair of keys with the private key corresponding to the MApubKey in the migration authority 101. The migration package regeneration unit 505 then encrypts the result obtained by decryption with the 128-bit master key expressed by the (B) AES indicated by the master key algorithm 4403b and the (A) master key length 4403a. The section 4434 surrounded by a dashed line, which is the tree structure 4402a to the left of the regeneration example 4402, excluding the master key 4431, is thus regenerated as the migration package. The section 4434 includes the key 4432 and the (data 1) 4433.

This concludes the description of Embodiment 2 of the present invention.

### 3. Other Modifications

While the present invention has been described based on the above Embodiments, the present invention is of course not limited to these Embodiments. The present invention also includes cases such as the following.

(1) In the above Embodiments, data is assumed to be transmitted between (i) the migration authority 101 and (ii) the first electronic terminal 3011 and the second electronic terminal 3012 via a network such as the Internet, but a structure that uses a removable recording medium is also possible.

(2) In the above Embodiments, the migration authority 101 and the first electronic terminal 3011 are described as separate structures, but the first electronic terminal 3011 may be provided with the functions of the migration authority 101 and may accept a request to download a migration package from the second electronic terminal 3012.

(3) In the above Embodiments, the first electronic terminal 3011, i.e. the migration source, is provided with asymmetric SRK, and the second electronic terminal 3012, i.e. the migration destination, is provided with symmetric SRK, but the first electronic terminal 3011 may be provided with symmetric SRK and the second electronic terminal 3012 with asymmetric SRK. Furthermore, both the first electronic terminal 3011 and the second electronic terminal 3012 may be provided with symmetric SRK, or both may be provided with asymmetric SRK.

(4) In the above Embodiments, the AIK certificate 210, information management certificate 211, and conformance certificate 212 are issued by the migration authority 101, but these certificates may be issued by a third party certificate authority. In this case, the migration authority 101 uses the certificates issued by the certificate authority to verify the AIK certificate 210, information management certificate 211, and conformance certificate 212.

(5) In the above Embodiments, the entire tree of managed private data is described as being migrated, but the user may select part of the tree structure for migration.

(6) In the embodiments, the migration authority 101 regenerates the entire migration package at once, but when the size of data in the migration package is large, the migration authority 101 may regenerate the migration package in steps, outputting data in each step to the second electronic terminal 3012.

(7) In the above Embodiments, the migration permission determination unit 504 makes a determination based on parameters included in the encryption strength table 701 and authentication level determination table 801, but the migration permission determination unit 504 may make a determination based on a key update function, or on a lifetime of a key, in the first electronic terminal and the second electronic terminal. Furthermore, instead of determining the strength level of encryption, the migration permission determination unit 504 may make a decision based only on the evaluation level.

(8) In the above Embodiments, a plurality of keys and a plurality of pieces of data form a tree structure in the migration package, but the migration package is not limited in this way. Only a plurality of keys may form a tree structure in the migration package.

(9) The above devices are, specifically, a computer system composed of a microprocessor, ROM, RAM, hard disk unit, display unit, keyboard, mouse, etc. Computer programs are stored on the RAM or the hard disk unit. By operating in accordance with the computer programs, the microprocessor achieves the functions of each device. In order to achieve predetermined functions, the computer programs are composed of a combination of multiple command codes that indicate instructions for the computer. Note that each of the devices is not limited to a computer system that includes all of the following components: microprocessor, ROM, RAM, hard disk unit, display unit, keyboard, mouse, etc.; each of the devices may also be a computer system composed of only some of these components.

(10) Part or all of the components comprising each of the above-described devices may be assembled as one system Large Scale Integration (LSI). A system LSI is an ultra-multifunctional LSI produced by integrating multiple components on one chip and, more specifically, is a computer system including a microprocessor, ROM, RAM, and the like. Computer programs are stored in the RAM. The microprocessor operates according to the computer programs, and thereby the system LSI accomplishes its functions.

Individual components comprising each of the above-described devices may respectively be made into discrete chips, or part or all of the components may be made into one chip.

Although referred to here as a system LSI, depending on the degree of integration, the terms IC, LSI, super LSI, or ultra LSI are also used. In addition, the method for assembling integrated circuits is not limited to LSI, and a dedicated communication circuit or a general-purpose processor may be used. A Field Programmable Gate Array (FPGA), which is programmable after the LSI is manufactured, or a reconfigurable processor, which allows reconfiguration of the connection and setting of circuit cells inside the LSI, may be used.

Furthermore, if technology for forming integrated circuits that replaces LSIs emerges, owing to advances in semiconductor technology or to another derivative technology, the integration of functional blocks may naturally be accomplished using such technology. The application of biotechnology or the like is possible.

(11) Part or all of the components comprising each of the above devices may be assembled as an IC card detachable from each device, or as a single module. The IC card/module is a computer system that includes a microprocessor, ROM, RAM, etc. The IC card/module may include therein the above-mentioned ultra-multifunctional LSI. The microprocessor operates according to computer programs, and the IC card/module thereby accomplishes its functions. The IC card/module may be tamper resistant.

(12) The present invention may be the above-described method. The present invention may be computer programs that achieve the method by a computer or may be a digital signal comprising the computer programs.

The present invention may also be a computer-readable recording medium, such as a flexible disk, hard disk, CD-ROM, MO, DVD, DVD-ROM, DVD-RAM, BD (Blu-ray Disc), or semiconductor memory, on which the above-mentioned computer program or digital signal is recorded. The present invention may also be the digital signal recorded on such a recording medium.

The present invention may also be the computer programs or digital signal to be transmitted via networks, of which telecommunications networks, wire/wireless communications networks, and the Internet are representative, or via data broadcasting.

The present invention may also be a computer system comprising a microprocessor and memory, the memory storing the computer programs, and the microprocessor operating in accordance with the computer programs.

Also, another independent computer system may implement the computer programs or digital signal after the computer programs or digital signal are transferred via being recorded on the recording medium, via one of the above-mentioned networks, etc.

(13) The above Embodiments and Modifications may be combined with one another.

### [Industrial Applicability]

By using the electronic terminal and migration authority in the present invention, private data can be securely migrated between electronic terminals even in conditions where electronic terminals with differing security authentication levels or strength levels exist. Furthermore, if a user acquires an electronic terminal provided with the latest encryption algorithm, the user can achieve data management more securely and quickly than with a conventional electronic terminal.

### [Reference Signs List]

- 101: migration authority
- 3710: migration authority
- 3011: first electronic terminal
- 3012: second electronic terminal
- 3013: third electronic terminal
- 3711: fourth electronic terminal
- 3712: fifth electronic terminal
- 3713: sixth electronic terminal
- 3714: seventh electronic terminal
- 201: trusted platform module
- 202: TCG software stack
- 203: local migration services
- 204: controlling application
- 205: local application
- 206: I/O unit
- 207: storage region
- 500: data receiving unit
- 501: attestation processing unit
- 502: certificate analysis unit
- 503: migration package registration unit
- 504: migration permission determination unit
- 505: migration package regeneration unit
- 506: data transmission unit
- 507: storage region

## Claims

1. A key migration device for controlling migration of keys from a key recording device to an output destination device, the key recording device having recorded thereon a collection of keys including a key generated by a key generation device, the key migration device comprising:
a receiving unit operable to receive, from the output destination device, a request to acquire a key recorded on the key recording device;
an acquisition unit operable, upon receipt of the request, to acquire a generation level and an output destination level, the generation level being a security level of the key generation device, and the output destination level being a security level of the output destination device;
a determination unit operable to determine whether a relationship between the generation level and the output destination level fulfills a predetermined condition; and
a control unit operable, regardless of a security level of the key recording device, to output the key generated by the key generation device, from among the collection of keys, to the output destination device when the relationship between the generation level and the output destination level fulfills the predetermined condition, and to prohibit output of the key generated by the key generation device when the relationship between the generation level and the output destination level does not fulfill the predetermined condition.

2. The key migration device of claim 1, wherein
the collection of keys includes, along with the key generated by the key generation device, an additional key generated by the key recording device,
the predetermined condition is designated as a first predetermined condition, and
the control unit further determines whether a relationship between a recording level, which is a security level of the key recording device, and the output destination level fulfills a second predetermined condition, and when the relationship between the generation level and the output destination level fulfills the first predetermined condition, but the relationship between the recording level and the output destination level does not fulfill the second predetermined condition, outputs the collection of keys except for the additional key to the output destination device.

3. The key migration device of claim 2, wherein
even when the relationship between the generation level and the output destination level does not fulfill the first predetermined condition, when the relationship between the recording level and the output destination level fulfills the second predetermined condition, the control unit further outputs the additional key to the output destination device.

4. The key migration device of claim 1, wherein
the collection of keys recorded on the key recording device further includes, in addition to the key generated by the key generation device, an additional key generated by a key adding device that differs from the key generation device and the key recording device,
the predetermined condition is designated as a first predetermined condition, and
the control unit further determines whether a relationship between the output destination level and an additional level, which is a security level of the key adding device, fulfills a second predetermined condition, and when the relationship between the generation level and the output destination level fulfills the first predetermined condition, but the relationship between the additional level and the output destination level does not fulfill the second predetermined condition, outputs the collection of keys except for the additional key to the output destination device.

5. The key migration device of claim 4, wherein
even when the relationship between the generation level and the output destination level does not fulfill the first predetermined condition, when the relationship between the additional level and the output destination level fulfills the second predetermined condition, the control unit further outputs the additional key to the output destination device.

6. The key migration device of claim 1, wherein
the acquisition unit further acquires a recording level that is a security level of the key recording device,
the determination unit determines whether a relationship between the recording level and the output destination level fulfills another predetermined condition, and when the other predetermined condition is not fulfilled, determines whether a relationship between the generation level and the output destination level fulfills a second predetermined condition, and
the control unit outputs the key generated by the key generation device when the relationship between the generation level and the output destination level fulfills the second predetermined condition.

7. The key migration device of claim 1, wherein
the predetermined condition is fulfilled when the output destination level is equal to or higher than a security level with which the output destination level is compared.

8. The key migration device of claim 1, wherein
the key migration device and the key recording device are a same device.

9. A key migration method used in a key migration device for controlling migration of keys from a key recording device to an output destination device, the key recording device having recorded thereon a collection of keys including a key generated by a key generation device, the key migration method comprising the steps of:
receiving, from the output destination device, a request to acquire a key recorded on the key recording device;
acquiring, upon receipt of the request, a generation level and an output destination level, the generation level being a security level of the key generation device, and the output destination level being a security level of the output destination device;
determining whether a relationship between the generation level and the output destination level fulfills a predetermined condition; and
outputting, regardless of a security level of the key recording device, the key generated by the key generation device, from among the collection of keys, to the output destination device when the relationship between the generation level and the output destination level fulfills the predetermined condition, and prohibiting output of the key generated by the key generation device when the relationship between the generation level and the output destination level does not fulfill the predetermined condition.

10. A computer-readable recording medium on which is recorded a computer program for key migration used in a computer for controlling migration of keys from a key recording device to an output destination device, the key recording device having recorded thereon a collection of keys including a key generated by a key generation device, the computer program causing the computer to perform the steps of:
receiving, from the output destination device, a request to acquire a key recorded on the key recording device;
acquiring, upon receipt of the request, a generation level and an output destination level, the generation level being a security level of the key generation device, and the output destination level being a security level of the output destination device;
determining whether a relationship between the generation level and the output destination level fulfills a predetermined condition; and
outputting, regardless of a security level of the key recording device, the key generated by the key generation device, from among the collection of keys, to the output destination device when the relationship between the generation level and the output destination level fulfills the predetermined condition, and prohibiting output of the key generated by the key generation device when the relationship between the generation level and the output destination level does not fulfill the predetermined condition.

11. An integrated circuit for controlling migration of keys from a key recording device to an output destination device, the key recording device having recorded thereon a collection of keys including a key generated by a key generation device, the integrated circuit comprising:
a receiving unit operable to receive, from the output destination device, a request to acquire a key recorded on the key recording device;
an acquisition unit operable, upon receipt of the request, to acquire a generation level and an output destination level, the generation level being a security level of the key generation device, and the output destination level being a security level of the output destination device;
a determination unit operable to determine whether a relationship between the generation level and the output destination level fulfills a predetermined condition; and
a control unit operable, regardless of a security level of the key recording device, to output the key generated by the key generation device, from among the collection of keys, to the output destination device when the relationship between the generation level and the output destination level fulfills the predetermined condition, and to prohibit output of the key generated by the key generation device when the relationship between the generation level and the output destination level does not fulfill the predetermined condition.
